(19) **Europäisches Patentamt European Patent Office Office européen des brevets**

(11) **EP 3 271 633 B1**

(12) **FASCICULE DE BREVET EUROPEEN**

(45) Date de publication et mention
de la délivrance du brevet:
**26.08.2020 Bulletin 2020/35**

(51) Int Cl.:
***F16L 27/12*** *(2006.01)*  ***F28D 20/00*** *(2006.01)*

(21) Numéro de dépôt: **16714779.2**

(86) Numéro de dépôt international:
**PCT/EP2016/055760**

(22) Date de dépôt: **17.03.2016**

(87) Numéro de publication internationale:
**WO 2016/146724 (22.09.2016 Gazette 2016/38)**

(54) **SYSTÈME TÉLESCOPIQUE ET FLOTTANT DE DISTRIBUTION DE FLUIDE CALOPORTEUR POUR UN DISPOSITIF DE STOCKAGE D'ÉNERGIE THERMIQUE**

**TELESKOPISCHES UND SCHWIMMENDES SYSTEM ZUR VERTEILUNG EINER WÄRMEÜBERTRAGUNGSFLÜSSIGKEIT FÜR EINE WÄRMEENERGIESPEICHERVORRICHTUNG**

**TELESCOPIC AND FLOATING SYSTEM FOR DISTRIBUTING HEAT TRANSFER FLUID FOR A THERMAL ENERGY STORAGE DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2015 FR 1552234**

(43) Date de publication de la demande:
**24.01.2018 Bulletin 2018/04**

(73) Titulaire: **Commissariat à l'Énergie Atomique et aux Énergies Alternatives**
**75015 Paris (FR)**

(72) Inventeurs:
• **MIRATON, Arnaud**
**38000 Grenoble (FR)**
• **MATRINGE, Gilles**
**38100 Grenoble (FR)**

(74) Mandataire: **Brevalex**
**95, rue d'Amsterdam**
**75378 Paris Cedex 8 (FR)**

(56) Documents cités:
**EP-A1- 1 039 256**  **EP-A2- 2 418 449**
**WO-A1-00/63624**  **CZ-A3- 20 080 237**
**FR-A1- 2 364 411**  **FR-A1- 2 498 171**
**GB-A- 1 439 291**  **GB-A- 2 074 706**
**GB-A- 2 511 590**

**Description**

**DOMAINE TECHNIQUE**

La présente invention se rapporte au domaine général du stockage d'énergie thermique, notamment par chaleur sensible, en particulier à des fins de stockage domestique et/ou de stockage pour un réseau de chaleur. Elle concerne plus spécifiquement le domaine des systèmes d'injection et/ou de soutirage d'un fluide caloporteur au sein d'un dispositif de stockage d'énergie thermique.

L'invention propose ainsi un système de distribution de fluide caloporteur pour un dispositif de stockage d'énergie thermique, un dispositif de stockage d'énergie thermique comportant un tel système de distribution et un réservoir de stockage thermique stratifié de fluide caloporteur, ainsi qu'un procédé associé de distribution de fluide caloporteur dans un dispositif de stockage d'énergie thermique.

**ÉTAT DE LA TECHNIQUE ANTÉRIEURE**

Actuellement, les besoins en énergie thermique sont certains, et notamment pour son utilisation à des fins de chauffage et de production d'eau chaude sanitaire (ECS).

Toutefois, de tels besoins en énergie thermique varient considérablement au cours d'une même journée. En effet, des pics de consommation en énergie thermique sont observés au cours de la journée. Ainsi, dans le cadre de l'utilisation de l'énergie thermique pour des besoins en chauffage par exemple, ces pics de consommation peuvent atteindre jusqu'à quatre fois la charge moyenne d'un réseau de chaleur, et les pics de consommation du matin et du soir, cumulés ensemble, peuvent représenter à eux seuls près de 30 % de la consommation journalière en énergie thermique. De la même façon, sur une année complète, les besoins en énergie thermique sont également variables puisque notamment les besoins en chauffage sont pratiquement nuls pendant l'été alors qu'ils peuvent atteindre des valeurs très élevées pendant l'hiver.

Pour pouvoir répondre à la demande en énergie thermique, l'alimentation en énergie thermique est assurée par des unités de production qui rencontrent des difficultés à se conformer à cette demande fluctuante, étant en effet généralement soit prévues pour être intermittentes, par exemple dans le cas de panneaux solaires thermiques, soit conçues pour fonctionner avec des régimes de fonctionnement stables et réguliers, telles que par exemple les centrales à bois.

Par conséquent, l'utilisation du stockage d'énergie thermique, en particulier par chaleur sensible, apparaît comme une solution adaptée pour permettre de concilier à la fois la demande fluctuante en énergie thermique et les contraintes de production d'énergie thermique, en absorbant ainsi par « effet tampon » les fluctuations propres à la demande et à la production.

Dans le stockage thermique par chaleur sensible, l'énergie est stockée sous la forme d'une élévation de température du matériau de stockage. La quantité d'énergie stockée est alors directement proportionnelle au volume, à l'élévation de température et à la capacité thermique du matériau de stockage. Ce type de stockage n'est limité que par la différence de température disponible et celle supportée par le matériau ou son conteneur, par les déperditions thermiques du stockage et par l'éventuel changement d'état que peut être amené à subir le matériau servant au stockage.

Un dispositif de stockage d'énergie thermique peut fonctionner en régime journalier, les charges et décharges se réalisant alors à l'échelle d'une journée avec typiquement une charge durant la journée et une décharge lorsqu'un besoin énergétique est demandé, voire également en régime inter saisonnier, les charges et décharges se réalisant alors à l'échelle d'une année avec typiquement une charge durant l'été et une décharge durant l'hiver.

En outre, un dispositif de stockage d'énergie thermique peut être conçu selon différentes tailles en fonction de son usage. En particulier, le volume de fluide caloporteur stocké peut être variable. Par exemple, le stockage domestique, par exemple pour un ballon d'ECS domestique ou un chauffe-eau solaire individuel, peut nécessiter un volume de fluide caloporteur de quelques centaines de litres à quelques mètres cubes. En revanche, le stockage pour un réseau de chaleur peut lui nécessiter un volume de fluide caloporteur bien plus important, et en particulier de quelques centaines de mètres cubes à plusieurs dizaines de milliers de mètres cubes.

Toutefois, quelle que soit la finalité envisagée du stockage thermique, il existe une problématique forte qui conditionne les performances du stockage thermique et qui consiste en la préservation de la stratification thermique au sein du réservoir du dispositif de stockage thermique, contenant le fluide caloporteur.

En effet, pour obtenir un stockage thermique de qualité, il est nécessaire d'obtenir un fort gradient de température entre les deux extrémités du stockage, notamment entre le haut et le bas du dispositif de stockage thermique considéré en position verticale.

Aussi, afin de préserver la qualité de stockage et donc ce gradient thermique, il faut pouvoir distribuer, à savoir injecter et/ou soutirer, le fluide caloporteur sans pour autant induire de mouvements convectifs responsables alors de la déstratification thermique. De plus, les températures d'injection n'étant pas constantes, il faut également pouvoir être capable d'injecter le fluide à une température donnée au sein d'une strate de température adéquate pour éviter un mélange du fluide stocké dans le réservoir du dispositif de stockage. De la même façon, en cas de soutirage, il faut pouvoir soutirer à partir de n'importe quelle strate de température en fonction du besoin en température demandé.

Dans le processus de charge ou de décharge d'un réservoir thermique d'un dispositif de stockage thermique, les fonctions de distribution et de diffusion de fluide caloporteur peuvent être distinguées l'une de l'autre. En effet, d'une part la fonction de distribution de fluide caloporteur consiste en tant que telle à distribuer le fluide caloporteur à un certain niveau, ou une certaine hauteur, du stockage du réservoir, tandis que d'autre part la fonction de diffusion de fluide caloporteur vise à limiter l'impact de l'injection/soutirage de fluide caloporteur dans la strate de stockage où a lieu la distribution.

Par ailleurs, il est à noter que la distribution d'énergie thermique dans le réservoir du dispositif de stockage peut être réalisée de façon directe, c'est-à-dire que le fluide de stockage du réservoir et le fluide injecté/soutiré sont identiques, ou encore de façon indirecte, par le biais de la présence d'un échangeur de chaleur équipant le dispositif de stockage. La solution indirecte permet d'éviter la problématique de diffusion qui peut engendrer une déstratification du réservoir thermique par effet de jet. Toutefois, elle induit généralement une perte exergétique due à l'échange même de chaleur entre les deux fluides distincts.

Ainsi, considérant les fonctions de distribution et de diffusion décrites précédemment pour un réservoir thermique d'un dispositif de stockage thermique, des solutions sont déjà connues dans l'art antérieur.

En ce qui concerne tout d'abord la distribution de fluide caloporteur, plusieurs types de distributeurs sont connus.

Il existe ainsi notamment le principe de l'injection fixe, consistant à injecter le fluide chaud en partie haute du réservoir de stockage par le biais d'une canalisation fixe et à soutirer le fluide froid en partie basse du réservoir. Un tel système d'injection est simple de mise en œuvre et de conception, et s'avère intéressant lorsque les températures d'entrée sont constantes et que le débit est faible. Toutefois, il engendre une stratification de mauvaise qualité dans le cas de conditions d'entrée et de sortie du fluide complexes, telles que la présence d'une température variable ou un débit élevé.

Par ailleurs, on connaît également le principe de l'injection multi-niveaux par vanne trois voies. Ce type d'injection est le plus répandu, et consiste en l'introduction du fluide caloporteur selon trois niveaux de température différents. La ou les vannes trois voies fonctionnent en tout ou rien, et sont régulées par la température de sortie du fluide. La mise en place d'une pluralité de vannes trois voies permet d'augmenter le nombre de strates d'injection dans le réservoir thermique. Cette technologie multi-niveaux permet d'obtenir au moins deux strates différentes de température dans le réservoir thermique, et elle est également robuste et fiable. Toutefois, son coût s'avère non négligeable et le fonctionnement en tout ou rien des vannes trois voies limite la régulation.

Il existe également le principe d'injection dit de la « canne de stratification » qui permet la distribution d'énergie par convection naturelle. Plus précisément, le fluide remonte à l'intérieur d'un tube thermosiphon (canne de stratification) percé de trous pour l'injection de fluide dans le réservoir. Par différence de masse volumique, le fluide circule dans la canne de stratification jusqu'à atteindre la hauteur de la strate de même température. Ce principe de fonctionnement permet donc l'établissement de strates tout au long du réservoir de stockage, donnant lieu à une large thermocline, mais à peu de brassage. Ce principe est également plus difficile à mettre en place. Par ailleurs, des installations peuvent être mises en place pour stopper la remontée de fluide dans la canne de stratification, telles que par exemple des clapets anti-retour ou des tubes inclinés. L'injection peut être réalisée de façon indirecte par le biais de l'utilisation d'un échangeur de chaleur.

Les cannes de stratification peuvent prendre différentes formes selon leur fabricant. On connaît ainsi le ballon à stratification active Stratos® de la société Solvis, qui comprend une pluralité de cannes de stratification, chacune couvrant des étages de température différents. On connaît également les ballons du type Conus® et Solus® de la société Consolar qui fonctionnent également à l'aide d'une canne de stratification. Plus précisément, un système d'échangeurs thermiques conçu sur le principe du thermosiphon permet d'établir un transfert thermique en contre-courant à très faibles pertes au sein du ballon. Ainsi, l'échangeur thermique supérieur réchauffe le fluide chaud en circulation. Le fluide du ballon se refroidit, et s'écoule par le tube d'écoulement vers la partie inférieure où il peut être chauffé à nouveau. En cas de faible rayonnement solaire, l'échangeur thermique situé dans la partie médiane et raccordé à une chaudière chauffe le tiers supérieur du ballon. Grâce à l'enveloppe conductrice de l'échangeur de chaleur d'appoint, la chaleur destinée à un appoint de chauffage ambiant est extraite de la partie médiane. Par grand soleil, le fluide caloporteur réchauffé est conduit par un tube de cuivre dans la partie inférieure de l'échangeur de chaleur. Par ailleurs, il existe également des accumulateurs à stratification des températures dynamiques tels que conçus par la société Ratiotherm, en particulier sous la référence Oskar®. Ainsi, différentes canalisations viennent se greffer à la canne de stratification sous forme de spirale et percée.

En outre, d'autres technologies sont actuellement en voie de développement, comme celles relatives à l'utilisation des manifolds (tubes poreux), prometteuses pour favoriser l'élaboration d'une stratification mais utilisant des matériaux plutôt adaptés à du stockage à faible échelle. Ainsi, les manifolds sont des matériaux pouvant se contracter ou se dilater selon les conditions, donnant ainsi la possibilité de libérer le fluide au bon niveau de pression. On connaît ainsi l'utilisation de manifolds sous la forme de tubes rigides poreux ou encore en tissu, l'inconvénient de tels matériaux venant surtout de leur faible épaisseur qui engendre de forts transferts thermiques à travers leur paroi.

De plus, il existe également des ballons solaires équipés de taules de stratification, qui sont destinées à séparer physiquement la partie chaude de la partie froide du ballon par la présence d'obstacles.

En ce qui concerne par ailleurs la fonction de diffusion de fluide caloporteur, et dans le cas de distributeurs à injection directe (donc sans échangeur de chaleur), il peut être intéressant de rajouter des diffuseurs ou brise-jets ayant pour fonction d'atténuer le phénomène de jet qui peut engendrer une dégradation de la stratification. Ainsi, diverses études ont été menées autour de cette problématique révélant que, d'une part pour les diffuseurs, il est possible de diminuer l'énergie cinétique et de permettre une bonne répartition du fluide caloporteur bien que ceux-ci ne permettent pas à eux seuls de régler le problème de la mise en place de la stratification et de son maintien, tandis que, d'autre part pour les brise-jets, il est possible de diminuer l'énergie cinétique bien que ceux-ci peuvent entraîner le brassage du fluide caloporteur injecté.

En outre, diverses autres solutions de conception de distributeurs, utilisant notamment le principe des cannes de stratification, et de diffuseurs de fluide dans un réservoir de stockage ont également été décrites dans la littérature brevet. A titres d'exemples, on peut ainsi citer la demande de brevet européen EP 2 065 666 A1 qui décrit la présence d'un serpentin confiné médian au stockage avec deux canes de distribution reliées à l'espace confiné, la demande de brevet coréen KR 2005-0064018 A qui décrit la réalisation d'un diffuseur avec une partie mobile permettant de modifier la section de passage du diffuseur, ou encore la demande internationale WO 2013/083911 A1 qui décrit un concept de brise-jet disposé à l'entrée d'eau dans un réservoir de stockage d'eau chaude. EP 1 039 256 A montre un système de distribution de fluide caloporteur pour un dispositif de stockage d'énergie thermique comportant un réservoir de stockage thermique stratifié de fluide caloporteur, la masse volumique solide de la partie solide du système de distribution, étant sensiblement égale à la masse volumique fluidique de la partie fluidique du système de distribution, comprenant le fluide caloporteur destiné à être distribué au sein de ladite strate thermique cible, pour permettre la flottaison dudit élément diffuseur au niveau de ladite strate thermique cible.

## EXPOSÉ DE L'INVENTION

Il existe un besoin pour proposer une solution alternative améliorée de système de distribution de fluide caloporteur pour un dispositif de stockage d'énergie thermique, notamment par chaleur sensible, comportant un réservoir de stockage de fluide caloporteur thermiquement stratifié, afin de réaliser des charges et/ou décharges de fluide caloporteur tout en empêchant, ou du moins en limitant fortement, la déstratification thermique au sein du réservoir de stockage.

L'invention a pour but de remédier au moins partiellement aux besoins mentionnés précédemment et aux inconvénients relatifs aux réalisations de l'art antérieur.

L'invention a ainsi pour objet, selon l'un de ses aspects, un système de distribution de fluide caloporteur pour un dispositif de stockage d'énergie thermique, selon la revendication 1.

Autrement dit, le système de distribution selon l'invention présente une densité volumique de masse de ce système, comprenant la masse volumique fluidique et la masse volumique solide du système de distribution, qui varie avec la température de la strate thermique cible.

De façon avantageuse encore, le système de distribution selon l'invention est ainsi configuré pour permettre la flottaison dudit élément diffuseur au niveau d'au moins strates thermiques cibles différentes, en particulier de températures différentes.

Par « réservoir de stockage thermique stratifié », on entend que le volume de fluide caloporteur contenu dans le réservoir de stockage thermique présente un gradient de température entre les deux extrémités du stockage. Autrement dit, le volume de fluide caloporteur du réservoir de stockage thermique peut être divisé en une multitude de couches thermiques superposées de fluide caloporteur présentant des températures différentes et graduelles depuis l'une des extrémités de stockage vers l'autre des extrémités de stockage, ces couches superposées formant ainsi des strates thermiques successives.

Grâce à l'invention, il peut être possible de distribuer le fluide caloporteur durant des phases de charge et/ou de décharge du réservoir de stockage thermique du dispositif de stockage d'énergie thermique tout en empêchant, ou du moins en minimisant, la perturbation de la stratification thermique au sein du réservoir pendant ces opérations.

De plus, le système de distribution selon l'invention présente l'avantage d'être entièrement autosuffisant. En effet, ce système peut se rétracter et se déployer sans aucune assistance extérieure, et son extrémité distale peut se placer continuellement dans la strate thermique cible de température adaptée. De façon avantageuse, aucune instrumentation du réservoir de stockage thermique, ni aucun système d'automatisation, de système mécanique ou de source d'énergie extérieure n'est ainsi nécessaire pour permettre le mouvement du système de distribution. En effet, seule la flottabilité du système de distribution, notamment de l'élément diffuseur, pilote le déplacement du système de distribution.

De cette façon, il peut également être possible de réduire considérablement tout besoin en maintenance, voire de s'en affranchir, ce qui représente un gain certain en termes de coût compte-tenu du fait que la maintenance et l'arrêt des installations entraînent classiquement des frais importants pour l'industriel.

Par ailleurs, la forme particulière divergente du système de distribution pouvant être conférée par une augmentation progressive de la section de passage du fluide caloporteur dans le sens de l'écoulement du fluide caloporteur peut permettre au système de distribution de jouer un rôle de diffuseur dès l'entrée du fluide caloporteur dans le système de distribution. En effet, la réduction de vitesse du fluide caloporteur peut ainsi s'effectuer progressivement sur toute la longueur du système de distribution, et s'avère moins brutale que pour certains des diffuseurs de l'art antérieur.

Le système de distribution selon l'invention peut en outre comporter l'une ou plusieurs des caractéristiques suivantes prises isolément ou suivant toutes combinaisons techniques possibles.

Le fluide caloporteur destiné à être distribué peut être de tout type, étant typiquement de l'eau.

De façon avantageuse, le système de distribution selon l'invention est un système de distribution à injection directe, le fluide caloporteur du réservoir de stockage thermique étant identique au fluide caloporteur injecté et/ou soutiré par le biais du système de distribution.

De plus, le système de distribution selon l'invention est avantageusement rigide et peut également être compacte, de sorte à pouvoir empêcher, ou du moins fortement limiter, tout brassage de fluide caloporteur dans le réservoir de stockage thermique lors du déplacement du système de distribution.

Comme indiqué précédemment, l'injection d'un fluide caloporteur dans une strate thermique cible de température sensiblement égale à la température du fluide caloporteur injecté, ou encore le soutirage d'un fluide caloporteur depuis une strate thermique cible de température prédéterminée, sont rendus possibles par un principe de flottaison de l'élément diffuseur, formant l'interface de communication fluidique entre le réservoir de stockage thermique et le système de distribution, au niveau de la strate thermique cible.

Selon l'invention, pour permettre une flottaison de l'élément diffuseur au niveau de la strate thermique cible, la masse volumique solide du système de distribution est choisie pour être sensiblement égale à la masse volumique fluidique du système de distribution, comprenant le fluide caloporteur à injecter et/ou à soutirer. De cette façon, le système de distribution se déploie et/ou se rétracte, en fonction de la variation de masse volumique, jusqu'à permettre à l'élément diffuseur d'être situé au niveau de la strate thermique cible.

Afin de mieux expliquer comment la valeur de masse volumique du système de distribution impacte sur le déploiement et/ou la rétractation de celui-ci, il faut comprendre que les opérations d'injection et/ou de soutirage de fluide caloporteur dépendent de deux parties, à savoir: une partie solide du système de distribution comprenant la pluralité d'éléments de distribution ; et une partie fluidique, notamment liquide, du système de distribution comprenant le fluide caloporteur destiné à être injecté et/ou soutiré au sein de la strate thermique cible de même température.

Ainsi, l'expression (a) de la masse volumique du système de distribution, pondérée par les volumes considérés, est la suivante :

$$(a) : \rho_{sd} = (\rho_s \times V_s + \rho_l \times V_l)]/(V_s + V_l),$$

où :

$\rho_{sd}$ représente la masse volumique du système de distribution,
$\rho_s$ et $\rho_l$ représentent respectivement les masses volumiques solide et fluidique des parties solide et fluidique présentées ci-dessus, et
$V_s$ et $V_l$ représentent respectivement les volumes des parties solide et fluidique présentées ci-dessus.

Comme indiqué précédemment et conformément à l'invention, la masse volumique solide $\rho_s$ est sensiblement égale à la masse volumique fluidique $\rho_l$.

De plus, de façon avantageuse, le volume solide $V_s$ de la partie solide du système de distribution est suffisamment faible, et donc négligeable, par rapport au volume liquide $V_l$ de la partie fluidique du système de distribution.

Dans ces conditions, si l'on reprend l'expression (a) mentionnée précédemment, la masse volumique $\rho_{sd}$ du système de distribution tend alors vers la masse volumique fluidique ρι de la partie fluidique du système de distribution. Autrement dit encore, la masse volumique $\rho_{sd}$ du système de distribution est sensiblement égale à la masse volumique $\rho_l$ du fluide caloporteur destiné à être injecté dans la strate thermique cible et/ou à être soutiré depuis la strate thermique cible. Par conséquent, la masse volumique $\rho_{sd}$ du système de distribution étant assimilable à la masse volumique $\rho_l$ du fluide caloporteur à distribuer, le système de distribution est alors apte à flotter à l'intérieur du réservoir de stockage thermique au niveau de la strate thermique cible.

Afin de pouvoir obtenir une valeur de la masse volumique solide de la partie solide du système de distribution sensiblement égale à la valeur de la masse volumique fluidique de la partie fluidique du système de distribution, diverses solutions peuvent être prévues.

En particulier, la pluralité d'éléments de distribution peut être réalisée dans un ou plusieurs matériaux de masse volumique sensiblement égale à la masse volumique du fluide caloporteur destiné à être distribué.

Préférentiellement, ce ou ces matériaux sont prévus pour supporter des températures élevées, allant notamment jusqu'à 100°C.

Selon l'invention , tout ou partie des éléments de distribution peut comporter au moins un élément de flottaison, notamment un flotteur d'air, configuré pour conférer à la pluralité d'éléments de distribution du système de distribution une masse volumique sensiblement égale à la masse volumique du fluide caloporteur destiné à être distribué.

La présence d'un ou plusieurs éléments de flottaison dans un ou plusieurs éléments de distribution peut notamment être souhaitable lorsque le ou les matériaux constitutifs des éléments de distribution sont de masse volumique élevée, c'est-à-dire nettement supérieure à la masse volumique du fluide caloporteur destiné à être distribué.

De façon avantageuse, le ou les éléments de flottaison sont ainsi définis de telle sorte que la masse volumique totale des éléments de flottaison soit sensiblement égale à la masse volumique du fluide caloporteur destiné à être distribué.

Selon l'invention, ledit au moins un élément de flottaison peut être intégré à l'intérieur d'une paroi latérale d'au moins un élément de distribution.

De cette façon, il peut être possible d'obtenir une répartition sensiblement uniforme de l'élément de flottaison et également d'améliorer l'équilibrage de l'élément de distribution.

De plus, ledit au moins un élément de flottaison peut s'étendre sur toute la longueur dudit au moins un élément de distribution, ou bien encore en partie.

Afin de simplifier la fabrication des éléments de distribution, il peut en particulier être envisagé de prévoir les configurations suivantes pour l'intégration d'un élément de flottaison à un élément de distribution.

Ainsi, chaque élément de distribution peut comporter un élément de flottaison, les éléments de flottaison étant identiques et de volume fixe. La masse volumique souhaitée de la pluralité d'éléments de distribution peut alors être obtenue par lestage des éléments de distribution d'une masse choisie pour atteindre la masse volumique souhaitée. Cette solution peut permettre de contrôler aisément la masse volumique en ajoutant progressivement du poids, ce qui peut autoriser une certaine imprécision dans la réalisation du système de distribution. En particulier, toute erreur de masse volumique peut être rectifiable.

Par ailleurs, l'intégration d'un élément de flottaison à l'intérieur d'une paroi latérale d'un élément de distribution pouvant être compliquée, ledit au moins un élément de flottaison peut encore être incorporé extérieurement à toute paroi dudit au moins un élément de distribution, dans au moins une cavité supplémentaire située à au moins une extrémité dudit au moins un élément de distribution. Ladite au moins une cavité supplémentaire peut alors accueillir l'intégralité du volume dudit élément de flottaison. Cette solution peut être plus simple à mettre en œuvre mais présente l'inconvénient d'une répartition non uniforme du poids au sein dudit au moins un élément distributeur, ce qui peut nuire au mouvement du système de distribution.

Par ailleurs, pour obtenir une valeur de la masse volumique solide de la partie solide du système de distribution sensiblement égale à la valeur de la masse volumique fluidique de la partie fluidique du système de distribution, il est également possible d'envisager l'intégration d'un matériau de masse volumique variable au niveau d'un élément de distribution, dont les fluctuations seraient proches de celles du fluide caloporteur destiné à être distribué. En particulier, tout ou partie des éléments de distribution peut comporter au moins un matériau de masse volumique variable intégré dans une enveloppe souple permettant sa dilatation et/ou sa rétractation en fonction de la température du fluide caloporteur destiné à être distribué de sorte à modifier la masse volumique totale des éléments de distribution.

De façon préférentielle, ledit au moins un matériau de masse volumique variable est intégré entre une paroi rigide de faible conductivité thermique et une paroi souple de forte conductivité thermique, l'ensemble formant notamment une paroi latérale d'au moins un élément de distribution. En effet, pour que le système de distribution de même masse volumique que le fluide caloporteur distribué puisse flotter continuellement au niveau de la strate thermique cible, il est souhaitable que le transfert thermique soit instantané entre le fluide caloporteur et le matériau de masse volumique variable, ce qui nécessite d'avoir une paroi intérieure souple de conductivité thermique élevée, et que le transfert thermique soit quasiment nul entre le matériau de masse volumique variable et les différentes strates thermiques du réservoir de stockage thermique, ce qui nécessite d'avoir une paroi extérieure rigide de conductivité thermique faible, autrement dit isolante.

Par ailleurs, le système de distribution peut comporter un élément proximal de distribution pourvu d'un moyen de solidarisation au dispositif de stockage d'énergie thermique, un élément distal de distribution pourvu d'un élément diffuseur de fluide caloporteur, et un ou plusieurs éléments intermédiaires de distribution, les éléments de distribution étant successivement emboîtés les uns dans les autres depuis l'élément proximal de distribution jusqu'à l'élément distal de distribution.

Le moyen de solidarisation de l'élément proximal de distribution peut par exemple comporter une pluralité d'orifices de fixation, par exemple par vis, au dispositif de stockage d'énergie thermique, ces orifices étant notamment régulièrement répartis tout autour de l'élément proximal de distribution.

De plus, la section de passage de fluide caloporteur des éléments de distribution peut avantageusement augmenter progressivement depuis l'élément proximal de distribution jusqu'à l'élément distal de distribution du système de distribution.

En particulier, cette augmentation progressive de la section de passage de fluide caloporteur depuis l'élément proximal de distribution vers l'élément distal de distribution peut être obtenue par le biais d'une variation croissante des diamètres des éléments de distribution. Cette variation croissante de section, ou de diamètre, en plus de faciliter et de permettre l'emboîtement des éléments de distribution entre eux, peut aussi permettre de réduire préalablement la vitesse du fluide caloporteur avant son entrée dans un élément diffuseur et sa diffusion dans le réservoir de stockage thermique. Ainsi, la réduction de vitesse du fluide caloporteur est plus progressive et moins brutale que pour un simple diffuseur tel que connu de l'art antérieur.

L'élément diffuseur de l'élément distal de distribution peut se présenter sous diverses formes. Toutefois, de façon préférentielle, l'élément diffuseur de l'élément distal de distribution peut comporter des moyens de diffusion radiaux de fluide caloporteur.

Ces moyens de diffusion radiaux de fluide caloporteur peuvent préférentiellement être répartis régulièrement sur le pourtour de l'élément distal de distribution. Ils peuvent se présenter sous la forme d'orifices d'injection et/ou de soutirage de fluide caloporteur.

De façon avantageuse, l'injection radiale permise par l'élément diffuseur de l'élément distal de distribution permet de réduire la vitesse d'entrée du fluide caloporteur dans le réservoir de stockage thermique.

A titre d'exemple, l'élément diffuseur peut se présenter sous la forme d'un disque percé sur son pourtour d'orifices d'injection et/ou de soutirage de fluide caloporteur. Le cas échéant, l'élément diffuseur peut être couplé à des entrées de fluide caloporteur coudées ou en forme de T.

En outre, les éléments de distribution peuvent se présenter sous la forme de tubes cylindriques avec des diamètres différents.

Les longueurs des éléments de distribution peuvent être différentes, mais sont de préférence identiques. De plus, les formes principales des éléments de distribution sont préférentiellement semblables. De même, le ou les matériaux constitutifs des éléments de distribution sont de préférence identiques pour tous les éléments de distribution.

Par ailleurs, l'emboîtement d'un premier élément de distribution dans un deuxième élément de distribution peut être réalisé par la coopération entre une portion distale de forme cylindro-tronconique du premier élément de distribution et une portion proximale de forme tronconique du deuxième élément de distribution, la portion proximale de forme tronconique du deuxième élément de distribution recouvrant la portion distale de forme cylindro-tronconique du premier élément de distribution de sorte à venir en butée l'une contre l'autre lors de l'éloignement par coulissement des premier et deuxième éléments de distribution l'un par rapport à l'autre.

De façon avantageuse, la forme tronconique de la portion proximale du deuxième élément de distribution coopérant avec la forme cylindro-tronconique de la portion distale du premier élément de distribution peut permettre d'empêcher une dislocation des premier et deuxième éléments de distribution l'un par rapport à l'autre, et également de préserver la cohésion globale du système de distribution.

Par ailleurs, de façon avantageuse, les éléments de distribution ne sont pas solidarisés les uns aux autres.

En particulier, il peut exister un faible jeu entre deux éléments de distribution successifs. La présence d'un tel jeu peut en effet permettre d'empêcher tout frottement qui pourrait nuire au déplacement de chaque élément de distribution. Aussi, de façon avantageuse, le seul instant de contact entre deux éléments de distribution successifs est constitué par le contact butée contre butée d'une portion proximale de forme tronconique de l'un des deux éléments de distribution et d'une portion distale de forme conique de l'autre des deux éléments de distribution, telles que décrites précédemment.

En outre, il est à noter que quand bien même la présence d'un tel jeu entre deux éléments de distribution successifs pourrait entraîner une fuite de fluide caloporteur au niveau des jonctions entre éléments de distribution, une telle fuite serait faible et donc admise et tolérée.

Les éléments de distribution peuvent préférentiellement être réalisés à partir d'un ou plusieurs matériaux polymères, notamment choisis parmi : du polycarbonate (PC), du polyamide (PA), du polyoxyméthylène (POM), du polyphényléther (PPE), du polytétrafluoroéthène (PTFE), du polyétheréthercétone (PEEK), du polyéthersulfone (PES), du polysulfone (PSU), du polyéthylènimine (PEI), du polysulfure de phénylène (PPS) et/ou du polyfluorure de vinylidène (PVDF).

En variante, les éléments de distribution peuvent également être réalisés à partir d'un ou plusieurs métaux, par exemple à partir d'aluminium ou d'acier, entre autres.

Néanmoins, le choix des matériaux polymères est privilégié du fait principalement de leur faible conductivité thermique, de leur disponibilité, de leur facilité de mise en forme et de leur faible coût. De plus, les matériaux utilisés doivent préférentiellement pouvoir supporter une contrainte de tenue en température aux environs de 100°C.

En outre, l'invention a encore pour objet, selon un autre de ses aspects, un dispositif de stockage d'énergie thermique, caractérisé en ce qu'il comporte :

- un réservoir de stockage thermique stratifié comportant un fluide caloporteur pour le stockage d'énergie thermique, et
- un système de distribution de fluide caloporteur tel que défini précédemment, s'étendant à l'intérieur du réservoir de stockage thermique pour l'injection et/ou le soutirage de fluide caloporteur.

De façon préférée, le dispositif de stockage d'énergie thermique selon l'invention est un dispositif de stockage d'énergie thermique par chaleur sensible.

De plus, le système de distribution peut être solidarisé à l'une de ses extrémités à une paroi interne du réservoir de stockage thermique, notamment la paroi interne supérieure, l'autre de ses extrémités comportant notamment ledit élément diffuseur de fluide caloporteur.

En outre, le dispositif de stockage d'énergie thermique selon l'invention peut comporter un élément de guidage, traversant l'intérieur des éléments de distribution du système de distribution sur toute sa longueur, étant notamment solidarisé à la paroi interne supérieure du réservoir de stockage thermique et à la paroi interne inférieure du réservoir de stockage thermique.

En particulier, cet élément de guidage peut se présenter sous la forme d'une tige de guidage s'étendant d'une extrémité à l'autre du réservoir de stockage thermique, à savoir de haut en bas. Un tel élément de guidage peut avantageusement permettre au système de distribution de rester stable, et notamment dans en position bien verticale, et également de faciliter le mouvement des éléments de distribution les uns par rapport aux autres.

Par ailleurs, le dispositif de stockage d'énergie thermique selon l'invention peut comporter, à l'intérieur du réservoir de stockage thermique, un premier dispositif d'injection et/ou de soutirage de fluide caloporteur fixé à la paroi interne supérieure du réservoir de stockage thermique et un deuxième dispositif d'injection et/ou de soutirage de fluide caloporteur fixé à la paroi interne inférieure du réservoir de stockage thermique pour respectivement permettre l'injection et/ou le soutirage de fluide caloporteur au sein de la strate thermique supérieure du réservoir de stockage thermique, adjacente à la paroi interne supérieure, et au sein de la strate thermique inférieure du réservoir de stockage thermique, adjacente à la paroi interne inférieure, le système de distribution permettant alors l'injection et/ou le soutirage de fluide caloporteur au sein de la ou des strates thermiques intermédiaires du réservoir de stockage thermique.

De façon avantageuse, la présence de tels premier et deuxième dispositifs d'injection et/ou de soutirage à l'intérieur du réservoir de stockage thermique peut permettre d'augmenter la précision de la distribution de fluide caloporteur. Ainsi, au sein du réservoir de stockage thermique, les fluides caloporteurs de températures extrêmes peuvent être en permanence injectés et/ou soutirés par les parties supérieure et inférieure du réservoir de stockage thermique, les fluides caloporteurs de températures intermédiaires pouvant alors être injectés et/ou soutirés par le système de distribution.

De cette façon, il peut être possible de réduire la plage de déplacement du système de distribution et ainsi de réduire davantage une erreur éventuelle de positionnement.

Le fonctionnement du système de distribution et des premier et deuxième dispositifs d'injection et/ou de soutirage de fluide caloporteur peut être piloté en température par le biais d'au moins une vanne trois voies, apte à distribuer le fluide caloporteur soit dans le système de distribution, soit dans le premier dispositif d'injection et/ou de soutirage, soit dans le deuxième dispositif d'injection et/ou de soutirage en fonction de la température du fluide caloporteur à distribuer.

De plus, la présence de tels premier et deuxième dispositifs d'injection et/ou de soutirage à l'intérieur du réservoir de stockage thermique peut permettre d'effectuer des opérations d'injection et de soutirage de fluide caloporteur de façon simultanée.

Par ailleurs, l'invention a également pour objet, selon un autre de ses aspects, un procédé de distribution de fluide caloporteur dans un dispositif de stockage d'énergie thermique, notamment par chaleur sensible, comportant un réservoir de stockage thermique stratifié de fluide caloporteur, pour l'injection et/ou le soutirage de fluide caloporteur au sein du réservoir de stockage thermique, caractérisé en ce qu'il est mis en œuvre au moyen d'un système de distribution tel que défini précédemment.

Le procédé de distribution selon l'invention comporte avantageusement l'étape consistant à injecter un fluide caloporteur dans une strate thermique du réservoir de stockage thermique de même température que le fluide caloporteur par le biais du système de distribution, notamment par le biais de l'élément diffuseur de fluide caloporteur.

De plus, le procédé de distribution selon l'invention comporte avantageusement l'étape consistant à soutirer un fluide caloporteur de température prédéterminée depuis une strate thermique du réservoir de stockage thermique de même température que le fluide caloporteur par le biais du système de distribution, notamment par le biais de l'élément diffuseur de fluide caloporteur.

Par ailleurs, le procédé de distribution selon l'invention peut comporter l'étape consistant à déterminer la masse volumique solide de la partie solide du système de distribution, comprenant la pluralité d'éléments de distribution, de façon à être sensiblement égale à la masse volumique fluidique de la partie fluidique du système de distribution, comprenant le fluide caloporteur destiné à être distribué, par injection et/ou soutirage.

Le système de distribution, le dispositif de stockage d'énergie thermique et le procédé de distribution selon l'invention peuvent comporter l'une quelconque des caractéristiques énoncées dans la description, prises isolément ou selon toutes combinaisons techniquement possibles avec d'autres caractéristiques.

## BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :

- la figure 1 représente, en perspective, un exemple de système de distribution conforme à l'invention dans une configuration où il est entièrement déployé,
- la figure 2 représente, en perspective, un exemple de dispositif de stockage d'énergie thermique conforme à l'invention comportant le système de distribution de la figure 1, le dispositif de stockage d'énergie thermique étant partiellement représenté en coupe pour visualiser le système de distribution positionné à l'intérieur,
- les figures 3A, 3B et 3C représentent respectivement, en perspective, l'élément proximal de distribution, un élément intermédiaire de distribution et l'élément distal de distribution du système de distribution de la figure 1,
- les figures 4A et 4B représentent respectivement, en perspective, le système de distribution de la figure 1 dans une configuration où il est entièrement rétracté et dans une configuration intermédiaire, partiellement rétracté et partiellement déployé,
- la figure 5 représente, en coupe, la configuration permettant l'emboîtement entre deux éléments de distribution du système de distribution de la figure 1,
- la figure 6 représente, en coupe et en perspective, une variante de réalisation d'un élément intermédiaire de distribution d'un système de distribution conforme à l'invention, intégrant un élément de flottaison,
- la figure 7 représente, en coupe et en perspective, une autre variante de réalisation intégrant un élément de guidage au travers d'un système de distribution conforme à l'invention,
- la figure 8 représente encore, en coupe, une autre variante de réalisation d'un élément de distribution d'un système de distribution conforme à l'invention, intégrant un matériau de masse volumique variable,
- la figure 9 représente, en coupe schématique, une variante de réalisation d'un dispositif de stockage d'énergie thermique conforme à l'invention,
- la figure 10 représente, en coupe, un détail agrandi de la configuration permettant l'emboîtement entre deux éléments de distribution d'un système de distribution conforme à l'invention, et
- la figure 11 représente, en coupe et en perspective, un exemple d'élément intermédiaire de distribution d'un système de distribution conforme à l'invention, intégrant un élément de flottaison sur une partie de sa longueur.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

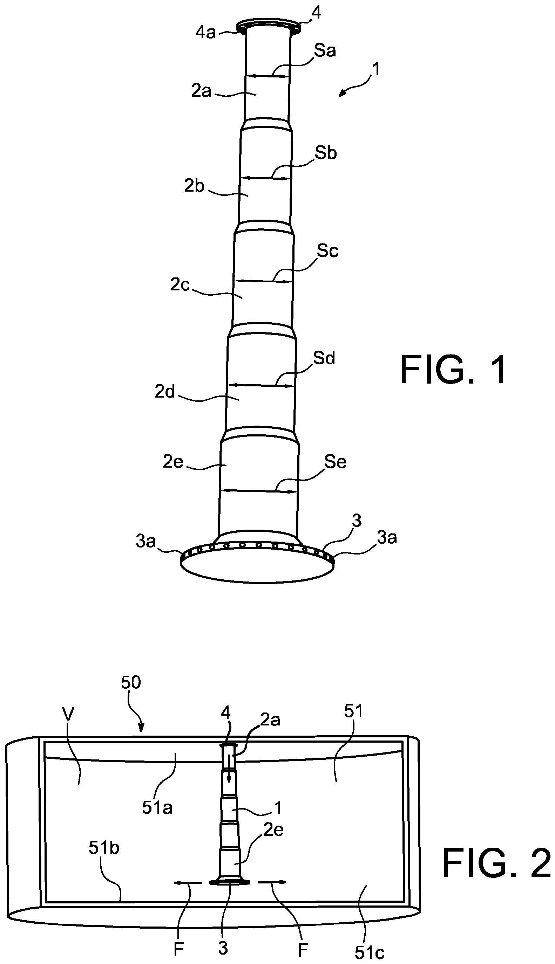

Il est à noter que dans tous les exemples de réalisation décrits ci-après en référence aux figures 1 à 11, le système de distribution 1 selon l'invention présente une forme générale de canne de flottaison 1 pourvue d'une pluralité d'éléments de distribution 2a-2e, encore appelés éléments de canne 2a-2e, se présentant sous la forme de tubes cylindriques imbriqués les uns dans les autres, sans solidarisation entre eux de façon à permettre un mouvement global en translation verticale des éléments de canne 2a-2e les uns par rapport aux autres. Ainsi, la canne de flottaison 1 est rétractable.

Par ailleurs, il est également à noter que, de façon avantageuse, la canne de flottaison 1 conforme à l'invention peut permettre d'assurer à la fois la fonction d'injection de fluide caloporteur dans le stockage, soit de l'extérieur vers l'intérieur du stockage, mais également la fonction de soutirage ou prélèvement de fluide caloporteur depuis le stockage, soit de l'intérieur vers l'extérieur du stockage.

En termes d'injection de fluide caloporteur dans le stockage, l'invention vise à permettre une injection du fluide caloporteur de température donnée au sein d'une strate thermique cible de même température. En outre, en termes de soutirage de fluide caloporteur depuis le stockage, l'invention vise à permettre le prélèvement à la température souhaitée tout en conservant la température la plus élevée dans le stockage afin de limiter les pertes exergétiques et de valoriser ultérieurement cette énergie à un niveau de température supérieure. Aussi, l'invention se propose entre autres de permettre un positionnement correct de la canne de flottaison 1 par rapport à une strate thermique préalablement ciblée du réservoir de stockage thermique.

Par ailleurs, dans tous les exemples décrits ci-après, on considère que le fluide caloporteur correspond à de l'eau, et que le stockage d'énergie thermique correspond à du stockage d'énergie thermique par chaleur sensible.

On va tout d'abord décrire, en référence à la figure 1, un exemple de canne de flottaison 1 conforme à l'invention et, en référence à la figure 2, un exemple de dispositif de stockage d'énergie thermique 50 conforme à l'invention comportant une telle canne de flottaison 1.

Comme on peut le voir sur la figure 1, la canne de flottaison 1 se présente sous une forme télescopique permettant son déploiement et sa rétractation en fonction du fluide caloporteur à distribuer. Elle comporte ainsi un ensemble de cinq éléments de canne 2a, 2b, 2c, 2d et 2e imbriqués les uns dans les autres et se translatant verticalement les uns par rapport aux autres.

Par ailleurs, comme on peut le voir sur la figure 2, le dispositif de stockage d'énergie thermique 50 comporte un réservoir de stockage thermique 51 stratifié, comprenant une paroi interne supérieure 51a, une paroi interne inférieure 51b, opposée à la paroi interne supérieure 51a, et une paroi interne latérale 51c, le réservoir de stockage thermique 51 contenant un volume V de fluide caloporteur.

Le nombre d'éléments de canne 2a-2e de la canne de flottaison 1 peut être variable, mais doit préférentiellement être suffisant pour permettre à la canne de flottaison 1 de se déployer sur toute la hauteur du réservoir de stockage thermique 51. En outre, les longueurs des éléments de canne 2a-2e peuvent être différentes, mais sont de préférence identiques.

La canne de flottaison 1 comporte plus précisément un élément proximal de canne 2a pourvu d'un moyen de solidarisation 4 permettant la fixation de l'élément proximal de canne 2a à la paroi interne supérieure 51a du réservoir de stockage thermique 51, par exemple par insertion de vis dans une pluralité d'orifices de fixation 4a du moyen de solidarisation 4, régulièrement répartis sur le pourtour d'un disque formant le moyen de solidarisation 4.

De plus, la canne de flottaison 1 comporte un élément distal de canne 2e pourvu d'un élément diffuseur 3 de fluide caloporteur. Cet élément diffuseur 3 se présente par exemple sous la forme d'un disque percé sur son pourtour d'une pluralité d'orifices de distribution 3a, pour l'injection et/ou le soutirage de fluide caloporteur. Ainsi, ces orifices de distribution 3a constituent des moyens de diffusion radiaux de fluide caloporteur, répartis régulièrement sur le pourtour de l'élément distal de canne 2e. De cette façon, lorsque l'élément diffuseur 3 permet une injection radiale de fluide caloporteur, il peut être possible de réduire la vitesse d'entrée du fluide caloporteur dans le réservoir de stockage thermique 51. Le cas échéant, l'élément diffuseur 3 peut être couplé à des entrées de fluide caloporteur coudées ou en forme de T. Il est de plus à noter que, sur la figure 2, les flèches F symbolisent l'injection radiale de fluide caloporteur dans le réservoir de stockage thermique 51 depuis l'élément diffuseur 3 de la canne de flottaison 1.

Par ailleurs, trois éléments intermédiaires de canne 2b, 2c et 2d sont situés entre l'élément proximal de canne 2a et l'élément distal de canne 2e de la canne de flottaison 1. Ces trois éléments intermédiaires de canne 2b, 2c et 2d sont successivement emboîtés les uns dans les autres depuis l'élément proximal de canne 2a jusqu'à l'élément distal de canne 2e.

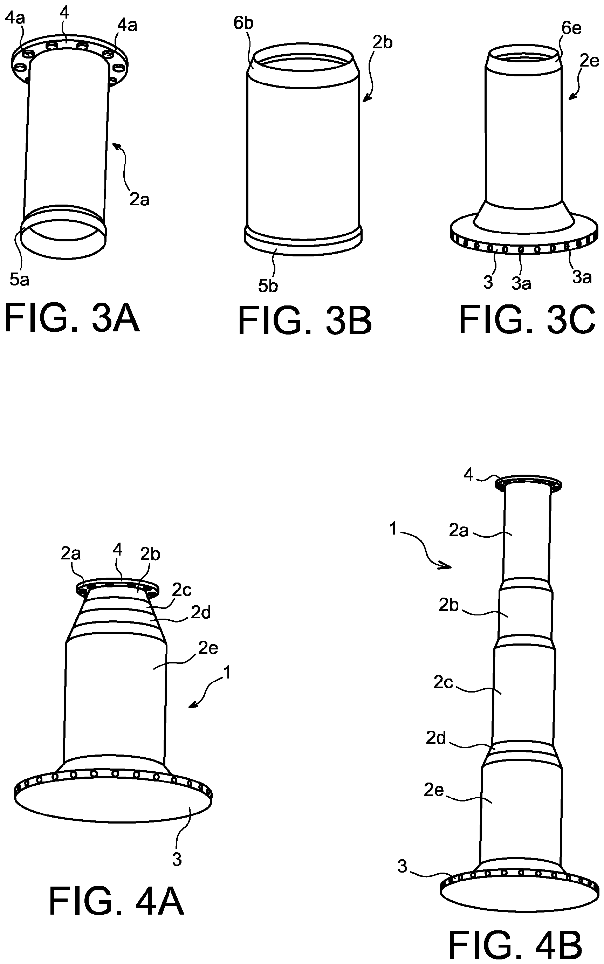

Les figures 3A, 3B et 3C représentent respectivement, en perspective, l'élément proximal de canne 2a, un élément intermédiaire de canne 2b, à titre d'exemple, parmi les trois éléments intermédiaires de canne 2b, 2c et 2d, et l'élément distal de canne 2e de la canne de flottaison 1.

En outre, les cinq éléments de canne 2a-2e de la canne de flottaison 1 présentent des diamètres différents. En particulier, comme on peut le voir sur la figure 1, la section de passage Sa, Sb, Sc, Sd et Se de fluide caloporteur de chaque élément de canne 2a-2e augmente progressivement depuis l'élément proximal de canne 2a jusqu'à l'élément distal de canne 2e de la canne de flottaison 1. L'augmentation progressive de la section de passage de fluide caloporteur dans la canne de flottaison 1 est donc obtenue par le biais d'une variation croissante des diamètres des éléments de canne 2a-2e, laquelle variation, en plus de faciliter et de permettre l'emboîtement des éléments de canne 2a-2e entre eux, permet aussi de réduire préalablement la vitesse du fluide caloporteur avant son entrée dans l'élément diffuseur 3 et sa diffusion dans le réservoir de stockage thermique 51.

Conformément à l'invention, le déplacement des éléments de canne 2a-2e les uns par rapport aux autres permet le déploiement ou la rétractation de la canne de flottaison 1 selon une configuration prédéterminée pour la distribution de fluide caloporteur au sein d'une strate thermique cible du réservoir de stockage thermique 51 de température sensiblement égale à la température du fluide caloporteur destiné à être distribué.

Afin de permettre à l'élément diffuseur 3 d'être situé convenablement en flottaison dans la strate thermique cible où le fluide caloporteur est à la même température que celle du fluide caloporteur à distribuer, c'est-à-dire à injecter et/ou à soutirer, la masse volumique solide $\rho_s$, ou encore appelée densité volumique de masse, de la partie solide de la canne de flottaison 1, qui comprend les éléments de canne 2a-2e, est sensiblement égale à la masse volumique liquide $\rho_l$ de la partie liquide de la canne de flottaison 1, qui comprend le fluide caloporteur destiné à être distribué au sein de la strate thermique cible.

En effet, l'injection de fluide caloporteur dans une strate thermique cible de température sensiblement égale à la température du fluide caloporteur injecté, ou encore le soutirage de fluide caloporteur depuis une strate thermique cible de température prédéterminée, sont rendus possibles par ce principe de flottaison de l'élément diffuseur 3, formant l'interface de communication fluidique entre le réservoir de stockage thermique 51 et la canne de flottaison 1, au niveau de la strate thermique cible. Ainsi, pour permettre une flottaison de l'élément diffuseur 3 au niveau de la strate thermique cible, la masse volumique solide $\rho_s$ de la canne de flottaison 1 est choisie pour être sensiblement égale à la masse volumique liquide $\rho_l$ de la canne de flottaison 1. De cette façon, la canne de flottaison 1 se déploie et/ou se rétracte, en fonction de la variation de masse volumique, jusqu'à permettre à l'élément diffuseur 3 d'être situé au niveau de la strate thermique cible.

Les figures 4A et 4B représentent par ailleurs respectivement, en perspective, la canne de flottaison 1 de la figure 1 dans une configuration où elle est entièrement rétractée et dans une configuration intermédiaire quelconque, partiellement rétractée et partiellement déployée. Il est ainsi possible de faire varier la position de l'élément diffuseur 3 de l'élément distale de canne 2e en fonction de la strate thermique ciblée dans le réservoir de stockage thermique 51.

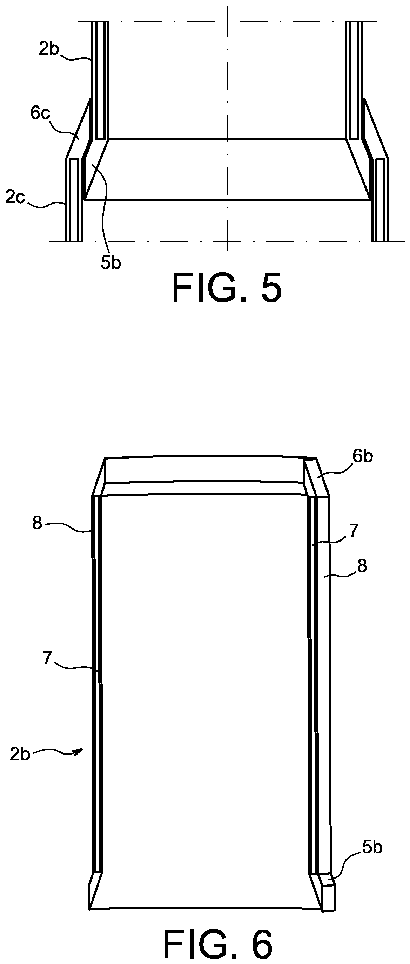

En outre, on a représenté sur la figure 5, en coupe, la configuration permettant l'emboîtement entre deux éléments de canne de la canne de flottaison 1 de la figure 1, à savoir ici l'élément intermédiaire de canne 2b et l'élément intermédiaire de canne 2c.

Comme on peut le voir sur cette figure 5, l'emboîtement de l'élément intermédiaire de canne 2b dans l'élément intermédiaire de canne 2c est réalisé par la coopération entre une portion distale de forme cylindro-tronconique 5b de l'élément intermédiaire de canne 2b et une portion proximale de forme tronconique 6c de l'élément intermédiaire de canne 2c. En particulier, la portion proximale de forme tronconique 6c de l'élément intermédiaire de canne 2c recouvre la portion distale de forme cylindro-tronconique 5b de l'élément intermédiaire de canne 2b de sorte à venir en butée l'une contre l'autre lors de l'éloignement par coulissement des éléments intermédiaires de canne 2b et 2c l'un par rapport à l'autre.

Il est à noter également que la figure 3A représente la portion distale de forme cylindro-tronconique 5a de l'élément proximale de canne 2a, que la figure 3B représente la portion proximale de forme tronconique 6b et la portion distale de forme cylindro-tronconique 5b de l'élément intermédiaire de canne 2b, et que la figure 3C représente la portion proximale de forme tronconique 6e de l'élément distal de canne 2e de la canne de flottaison 1.

De façon avantageuse, la forme tronconique des portions proximales des éléments de canne 2a-2e coopérant avec la forme cylindro-tronconique des portions distales des éléments de canne 2a-2e peut permettre d'empêcher une dislocation des éléments de canne 2a-2e les uns par rapport aux autres, et également de préserver la cohésion globale de la canne de flottaison 1.

De plus, comme on peut le voir sur la figure 5, les éléments de canne 2a-2e ne sont pas solidarisés les uns aux autres. En particulier, un faible jeu existe entre deux éléments de canne successifs pour empêcher tout frottement qui pourrait nuire au déplacement de chaque élément de canne.

Par ailleurs, chaque élément de canne 2a-2e peut être réalisé préférentiellement à partir d'un ou plusieurs matériaux polymères, notamment choisis parmi : du polycarbonate (PC), du polyamide (PA), du polyoxyméthylène (POM), du polyphényléther (PPE), du polytétrafluoroéthène (PTFE), du polyétheréthercétone (PEEK), du polyéthersulfone (PES), du polysulfone (PSU), du polyéthylènimine (PEI), du polysulfure de phénylène (PPS) et/ou du polyfluorure de vinylidène (PVDF), entre autres.

En outre, comme indiqué précédemment et de façon conforme à l'invention, afin de pouvoir obtenir une valeur de la masse volumique solide $\rho_s$ de la partie solide de la canne de flottaison 1 sensiblement égale à la valeur de la masse volumique liquide $\rho_l$ de la partie liquide de la canne de flottaison 1, diverses solutions peuvent être prévues.

Tout d'abord, les éléments de canne 2a-2e peuvent être réalisés dans un ou plusieurs matériaux de masse volumique $\rho_s$ sensiblement égale à la masse volumique $\rho_l$ du fluide caloporteur destiné à être distribué. De plus, de tels matériaux sont avantageusement prévus pour supporter des températures élevées, allant notamment jusqu'à 100°C.

Par ailleurs, tout ou partie des éléments de canne 2a-2e peut également comporter au moins un élément de flottaison 7, notamment un flotteur d'air 7, configuré pour conférer à la pluralité d'éléments de canne 2a-2e de la canne de flottaison 1 une masse volumique $\rho_s$ sensiblement égale à la masse volumique pi du fluide caloporteur destiné à être distribué.

Ainsi, la figure 6 représente, en coupe et en perspective, une variante de réalisation de l'élément intermédiaire de canne 2b d'une canne de flottaison 1 conforme à l'invention, qui intègre un tel flotteur d'air 7.

Plus précisément, le flotteur d'air 7 est intégré à l'intérieur de la paroi latérale 8 de l'élément intermédiaire de canne 2b, notamment sur toute la longueur de l'élément intermédiaire de canne 2b.

La présence d'un tel flotteur d'air 7 est notamment requise lorsque le ou les matériaux constitutifs des éléments de canne 2a-2e sont de masse volumique élevée, c'est-à-dire nettement supérieure à la masse volumique du fluide caloporteur destiné à être distribué. De plus, la présence du flotteur d'air 7 au sein de la paroi latérale 8 de l'élément intermédiaire de canne 2b permet d'obtenir une répartition sensiblement uniforme du flotteur d'air 7 et également d'améliorer l'équilibrage de l'élément intermédiaire de canne 2b.

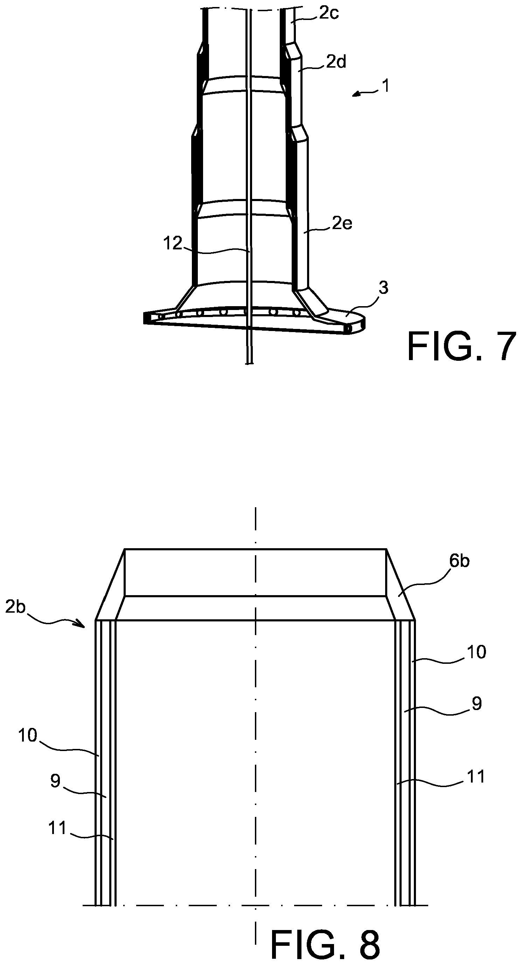

On a en outre représenté sur la figure 7, en coupe et en perspective, une autre variante de réalisation intégrant un élément de guidage 12 au travers d'une canne de flottaison 1 conforme à l'invention.

En effet, afin de permettre à la canne de flottaison 1 de rester stable en position verticale à l'intérieur du réservoir de stockage thermique 51, et également pour faciliter le mouvement des éléments de canne 2a-2e les uns par rapport aux autres, le dispositif de stockage d'énergie thermique 50 peut comporter un tel élément de guidage 12, qui traverse l'intérieur des éléments de canne 2a-2e sur toute la longueur de la canne de flottaison 1.

Cet élément de guidage 12 est préférentiellement fixé à la paroi interne supérieure 51a du réservoir de stockage thermique 51 et à la paroi interne inférieure 51b du réservoir de stockage thermique 51. Il se présente en particulier sous la forme d'une tige de guidage 12, s'étendant ainsi d'une extrémité à l'autre du réservoir de stockage thermique 51, à savoir de haut en bas.

Il est par ailleurs à noter que les déplacements verticaux des éléments de canne 2a-2e sont très lents car ils sont fonction de la vitesse d'accroissement de la strate thermique qui est très faible. Aussi, les perturbations de la stratification du réservoir de stockage thermique 51 sont peu affectées par le déplacement de la canne de flottaison 1.

Par ailleurs, pour obtenir une valeur de la masse volumique solide $\rho_s$ de la partie solide de la canne de flottaison 1 sensiblement égale à la valeur de la masse volumique liquide $\rho_l$ de la partie liquide de la canne de flottaison 1, il est également possible d'envisager l'intégration d'un matériau de masse volumique variable au niveau des éléments de canne 2a-2e, dont les fluctuations seraient proches de celles du fluide caloporteur destiné à être distribué.

Ainsi, la figure 8 représente, en coupe, une variante de réalisation de l'élément intermédiaire de canne 2b d'une canne de flottaison 1 conforme à l'invention, intégrant un matériau de masse volumique variable 9.

Plus précisément, le matériau de masse volumique variable 9 est intégré dans une enveloppe souple permettant sa dilatation et/ou sa rétractation en fonction de la température du fluide caloporteur destiné à être distribué de sorte à modifier la masse volumique totale des éléments de canne 2a-2e.

En particulier, ce matériau de masse volumique variable 9 est intégré entre une paroi externe rigide de faible conductivité thermique 10 et une paroi interne souple de forte conductivité thermique 11, l'ensemble formant ainsi une paroi latérale de l'élément intermédiaire de canne 2b.

En effet, pour que la canne de flottaison 1 de même masse volumique que le fluide caloporteur distribué puisse flotter continuellement au niveau de la strate thermique cible, il est souhaitable que le transfert thermique soit instantané entre le fluide caloporteur et le matériau de masse volumique variable 9, ce qui nécessite d'avoir une paroi intérieure souple de conductivité thermique élevée 11, et que le transfert thermique soit quasiment nul entre le matériau de masse volumique variable 9 et les différentes strates thermiques du réservoir de stockage thermique 51, ce qui nécessite d'avoir une paroi extérieure rigide de conductivité thermique faible 10, autrement dit isolante.

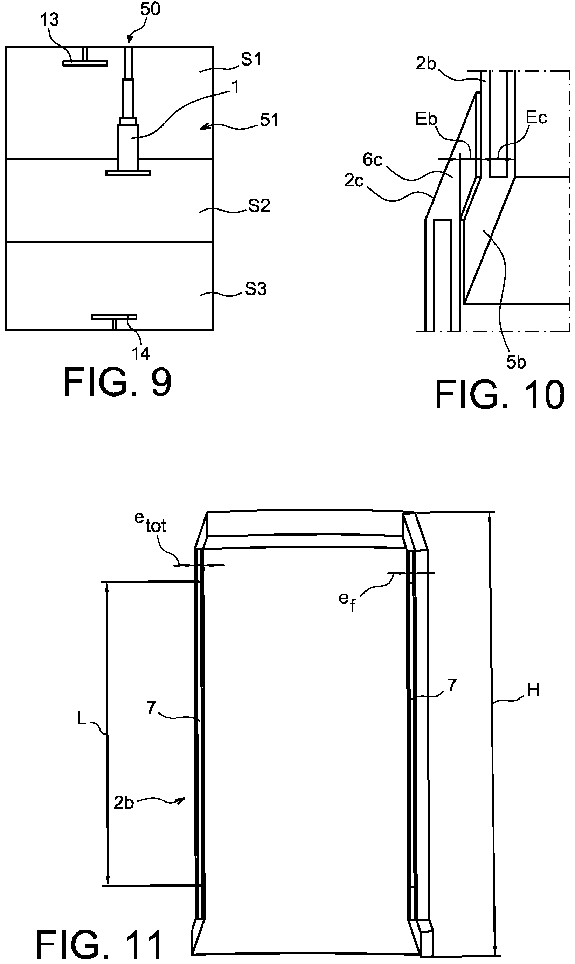

On a en outre représenté sur la figure 9, en coupe schématique, une variante de réalisation d'un dispositif de stockage d'énergie thermique 50 conforme à l'invention.

Sur cette figure 9, le dispositif de stockage d'énergie thermique 50 comporte un réservoir de stockage thermique 51 stratifié comprenant trois strates thermiques, à savoir une strate thermique supérieure S1, une strate thermique intermédiaire S2 et une strate thermique inférieure S3, contenant respectivement des fluides caloporteurs à des températures d'environ 100°C, 60°C et 20 °C.

Comme représenté, ce dispositif de stockage d'énergie thermique 50 comporte, à l'intérieur du réservoir de stockage thermique 51, un premier dispositif d'injection et/ou de soutirage 13 de fluide caloporteur fixé à la paroi interne supérieure 51a du réservoir de stockage thermique 51 et un deuxième dispositif d'injection et/ou de soutirage 14 de fluide caloporteur fixé à la paroi interne inférieure 51b du réservoir de stockage thermique 51 pour respectivement permettre l'injection et/ou le soutirage de fluide caloporteur au sein de la strate thermique supérieure S1 du réservoir de stockage thermique 51, adjacente à la paroi interne supérieure 51a, et au sein de la strate thermique inférieure S3 du réservoir de stockage thermique 51, adjacente à la paroi interne inférieure 51b, la canne de flottaison 1 permettant alors l'injection et/ou le soutirage de fluide caloporteur au sein de la strate thermique intermédiaire S2 du réservoir de stockage thermique 51.

Ainsi, de façon avantageuse, la présence de tels premier 13 et deuxième 14 dispositifs d'injection et/ou de soutirage à l'intérieur du réservoir de stockage thermique 51 permet d'augmenter la précision de la distribution de fluide caloporteur.

En effet, au sein du réservoir de stockage thermique 51, les fluides caloporteurs de températures extrêmes 100 °C et 20 °C peuvent être en permanence injectés et/ou soutirés par le haut et le bas du réservoir de stockage thermique 51, le fluide caloporteur de température intermédiaire 60 °C, pouvant alors être injecté et/ou soutiré par la canne de flottaison 1.

De cette façon, il peut être possible de réduire la plage de déplacement de la canne de flottaison 1 et ainsi de réduire davantage une erreur éventuelle de positionnement.

Il est par ailleurs à noter qu'au lieu d'une seule strate thermique intermédiaire S2, il pourrait y avoir une pluralité de strates thermiques intermédiaires au niveau desquelles se déplace la canne de flottaison 1, présentant des températures de fluide caloporteur comprises entre environ 30 et 80 °C.

De plus, le fonctionnement de la canne de flottaison 1 et des premier 13 et deuxième 14 dispositifs d'injection et/ou de soutirage de fluide caloporteur peut être piloté en température par le biais d'au moins une vanne trois voies, apte à distribuer le fluide caloporteur soit dans la canne de flottaison 1, soit dans le premier dispositif d'injection et/ou de soutirage 13, soit dans le deuxième dispositif d'injection et/ou de soutirage 14 en fonction de la température du fluide caloporteur à distribuer. Grâce à ces premier 13 et deuxième 14 dispositifs d'injection et/ou de soutirage, des opérations simultanées d'injection et de soutirage de fluide caloporteur peuvent également être réalisées.

On va maintenant décrire ci-après deux exemples de dimensionnement d'une canne de flottaison 1 et d'un dispositif de stockage d'énergie thermique 50 conformes à l'invention.

En particulier, ces deux exemples se différencient par la présence ou non de flotteurs d'air 7 au niveau de chaque élément de canne de la canne de flottaison 1.

Toutefois, pour chaque exemple, on considère que le dispositif de stockage d'énergie thermique 50 comporte un réservoir cylindrique de stockage thermique 51 présentant une hauteur d'environ 10 m et un diamètre d'environ 20 m. De plus, le volume effectif de stockage est d'environ 3142 m$^3$, le débit de distribution de fluide caloporteur, par injection/soutirage, est d'environ 86,4 m$^3$/h (ou encore 24 kg/s), la vitesse d'écoulement du fluide caloporteur au sein de la canne de flottaison 1 est d'environ 1 m/s et la vitesse d'injection/soutirage du fluide caloporteur dans/depuis le réservoir de stockage thermique 51 est d'environ 0,1 m/s.

On considère en outre, pour chaque exemple, que la canne de flottaison 1 comporte six éléments de canne 2a-2f, l'élément distal de canne 2f comprenant l'élément diffuseur 3. Les six éléments de canne 2a-2f présentent tous la même longueur, d'environ 1,5 m, ce qui permet à l'élément diffuseur 3 d'atteindre toutes les positions situées entre 1,5 m (canne de flottaison 1 totalement rétractée) et 9 m de profondeur (canne de flottaison 1 totalement déployée), de sorte à balayer l'essentiel de la hauteur du réservoir de stockage thermique 51.

Le principe de dimensionnement concerne notamment la détermination des diamètres des éléments de canne 2a-2f, ainsi que la longueur de flotteur d'air à intégrer dans la canne de flottaison 1, notamment au niveau des éléments de canne 2a-2f.

Exemple 1 : présence de flotteurs d'air

Dans ce premier exemple, on considère que les six éléments de canne 2a-2f intègrent des flotteurs d'air 7, tels que décrits précédemment. La pluralité des flotteurs d'air 7 forme le flotteur d'air global de la canne de flottaison 1.

Les débits et vitesses d'écoulement de fluide caloporteur conditionnent les diamètres des six éléments de canne 2a-2f.

Dans le tableau ci-dessous, les vitesses d'écoulement de fluide caloporteur et les diamètres intérieurs des six éléments de canne 2a-2f ont été calculés, en considérant que l'élément de canne 2a correspond à l'élément proximale de canne, que l'élément de canne 2f correspond à l'élément distal de canne et que les éléments de canne 2b, 2c, 2d, 2e correspondent aux éléments intermédiaires de canne.

|  | élément 2a | élément 2b | élément 2c | élément 2d | élément 2e | élément 2f |
|---|---|---|---|---|---|---|
| Diamètre intérieur de l'élément (mm) | 176 | 256 | 336 | 416 | 496 | 576 |
| Vitesse d'écoulement du fluide caloporteur (m/s) | 1 | 0,47 | 0,27 | 0,18 | 0,13 | 0,09 |

Plus précisément, le diamètre du premier élément proximal de canne 2a a été calculé pour satisfaire les contraintes en débits et vitesses d'écoulement. Les autres diamètres des autres éléments de canne 2b-2f ont été calculés à partir du diamètre du premier élément proximal de canne 2a en ajoutant pour chaque élément de canne une distance correspondante à la somme de l'épaisseur Ec de l'élément de canne et de l'épaisseur Eb supplémentaire engendrée par la forme cylindro-tronconique à l'extrémité distale de l'élément de canne pour permettre l'arrivée en butée.

La figure 10 représente, en coupe, un détail agrandi de la configuration permettant l'emboîtement entre, par exemple, l'élément intermédiaire de canne 2b et l'élément intermédiaire de canne 2c. Sur cette figure 10, on peut visualiser l'épaisseur Ec de l'élément intermédiaire de canne 2b et l'épaisseur Eb due à la présence de la portion distale de forme cylindro-tronconique 5b de l'élément intermédiaire de canne 2b.

Ainsi, chaque diamètre d'élément de canne peut être déterminé par la relation suivante : $D_i = D_{i-1} + 2 \times (Eb + Ec)$.

Dans l'exemple considéré, on estime que l'épaisseur Eb est égale à l'épaisseur Ec, égale à environ 20 mm.

Par ailleurs, afin de régler la masse volumique de chaque élément de canne 2a-2f à la masse volumique du fluide caloporteur, soit la masse volumique de l'eau à une température donnée, plusieurs possibilités sont envisageables.

De façon préférentielle, on intègre le flotteur d'air 7 entièrement dans la paroi latérale d'un élément de canne avec une épaisseur fixe, et on joue sur la longueur L du flotteur d'air 7 pour régler le volume de celui-ci.

La figure 11 représente ainsi, en coupe et en perspective, l'élément intermédiaire de canne 2b, intégrant un flotteur d'air 7 de longueur L sur une partie de sa longueur totale H.

On considère, dans cet exemple, que l'épaisseur de paroi latérale totale $e_{tot}$ de l'élément intermédiaire de canne 2b est d'environ 20 mm, et que l'épaisseur $e_f$ du flotteur d'air 7 est d'environ 10 mm.

Par ailleurs, le matériau sélectionné pour la réalisation des éléments de canne 2a-2f est le polyfluorure de vinylidène (PVDF) avec une température de ramollissement d'environ 132 °C et une masse volumique d'environ 1780 kg/m$^3$.

On peut déterminer la longueur du flotteur d'air 7 à intégrer par un calcul d'équilibre entre le poids de l'élément de canne 2b et la poussée d'Archimède, obtenant ainsi la relation suivante :

$$L = [H \times e_{tot} \times (\rho_{PVDF} - \rho_{eau\,X°C})] / (e_f \times \rho_{eau\,X°C}),$$

où :

- $\rho_{PVDF}$ représente la masse volumique du polyfluorure de vinylidène, et
- $\rho_{eauX°C}$ représente la masse volumique de l'eau à X °C, X étant un nombre.

De cette façon, on obtient alors le tableau ci-dessous donnant la longueur L du flotteur d'air 7 intégré dans un élément de canne de longueur totale H, lorsque l'on considère des températures de fluide caloporteur (de l'eau) à 40 °C, 60 °C et 80 °C.

| H | L à 40°C | L à 60°C | L à 80°C |
|---|---|---|---|
| 1,5 m | 1,191 m | 1,216 m | 1,247 m |

Par ailleurs, l'élément diffuseur 3 peut quant à lui être sous la forme d'un disque de diamètre égal à environ 800 mm, et être percé de 8 trous d'environ 200 mm de diamètre, espacés d'environ 300 mm permettant une injection/soutirage d'eau à une vitesse d'environ 0,1 m/s.

Exemple 2 : absence de flotteurs d'air

Dans ce deuxième exemple, on considère que les six éléments de canne 2a-2f sont dépourvus de flotteurs d'air 7, tels que décrits précédemment.

Dans ce cas, les masses volumiques des éléments de canne 2a-2f doivent être déterminées de façon précise pour permettre la flottaison voulue de l'élément diffuseur 3 au niveau d'une strate thermique cible.

Le tableau ci-dessous donne les masses volumiques des éléments de canne 2a-2f, et le total donne la masse volumique de la canne de flottaison 1, lorsque celle-ci est composée :

- d'une partie solide comprenant les éléments de canne 2a-2f de la canne de flottaison 1 réalisés dans un matériau ayant une masse volumique proche de celle de l'eau, notamment le Rilsan® de la société Arkema de masse volumique égale à 1030 kg/m$^3$ ; de plus, l'épaisseur $e_{tot}$ de paroi des éléments de canne 2a-2f est considérée égale à environ 2 mm ;
- d'une partie liquide comprenant l'eau contenue dans la canne de flottaison 1; on considère en particulier que l'eau est injectée à 60 °C et présente une masse volumique d'environ 983,2 kg/m$^3$.

Autrement dit, les paramètres de calcul sont tels que : $\rho_s$ = 1030 kg/m$^3$, $\rho_l$ = 983,2 kg/m$^3$ et également H = 1,5 m.

| élément de canne | diamètre intérieur (m) | diamètre extérieur (m) | surface intérieure (m$^2$) | surface extérieure (m$^2$) | volume solide (m$^3$) | volume liquide (m$^3$) | masse volumique solide (kg/m$^3$) |
|---|---|---|---|---|---|---|---|
| 2a | 0,176 | 0,18 | 0,0243 | 0,0254 | 0,0017 | 0,0365 | 985,3 |
| 2b | 0,256 | 0,26 | 0,0515 | 0,0531 | 0,0024 | 0,0772 | 984,6 |
| 2c | 0,336 | 0,34 | 0,0887 | 0,0908 | 0,0032 | 0,1330 | 984,3 |
| 2d | 0,416 | 0,42 | 0,1359 | 0,1385 | 0,0039 | 0,2039 | 984,1 |
| 2e | 0,496 | 0,5 | 0,1932 | 0,1964 | 0,0047 | 0,2898 | 983,9 |

(suite)

| élément de canne | diamètre intérieur (m) | diamètre extérieur (m) | surface intérieure (m²) | surface extérieure (m²) | volume solide (m³) | volume liquide (m³) | masse volumique solide (kg/m³) |
|---|---|---|---|---|---|---|---|
| 2f | 0,576 | 0,58 | 0,2606 | 0,2642 | 0,0054 | 0,3909 | 983,8 |
| Total | | | | | 0,0214 | 1,1313 | 984,1 |

Les résultats montrent que, dans ces conditions, la masse volumique de la canne de flottaison 1, égale à 984,1 kg/m³, est très proche de la masse volumique de l'eau injectée, égale à 983,2 kg/m³.

En réalité, l'écarte de masse volumique, égal à 0,9 kg/m³, correspond à un écart de température de 1,5 °C, ce qui reste donc une erreur faible.

Cependant, ce calcul précédent est réalisé en considérant une canne de flottaison 1 complètement dépliée pour une configuration où la strate thermique cible, de température égale à 60 °C et de masse volumique égale à 983,2 kg/m³, est située en fond de réservoir de stockage thermique 51.

Or, la canne de flottaison 1 doit pouvoir distribuer l'eau dans la strate thermique cible quelle que soit sa position dans le réservoir de stockage thermique 51.

Toutefois, lorsque la canne de flottaison 1 est repliée, alors elle contient moins de fluide caloporteur, c'est-à-dire moins de liquide. L'influence de la partie solide sur la masse volumique de l'ensemble devient donc plus importante.

Par exemple, dans le cas extrême où la canne de flottaison 1 est totalement repliée, alors la partie débitante de la canne de flottaison 1 est réduite à l'élément proximal de canne 2a. Par contre, le volume solide est celui de la canne de flottaison 1 dans sa totalité et correspond donc à la somme des volumes solides de chaque élément de canne 2a-2f. Partant de cet exemple, le tableau ci-dessous permet d'obtenir la masse volumique de la canne de flottaison 1.

| élément de canne | diamètre intérieur (m) | surface intérieure (m²) | volume solide (m³) | volume liquide (m³) | masse volumique solide (kg/m³) |
|---|---|---|---|---|---|
| 2a | 0,176 | 0,0243 | 0,0214 | 0,0365 | 1000,5 |

Aussi, il est important de noter que la masse volumique de la canne de flottaison 1 dépend de la quantité d'eau à distribuer contenue dans celle-ci, et par conséquent de son état de déploiement.

Le tableau ci-dessous met en évidence les différences entre la masse volumique du liquide à distribuer et la masse volumique de la canne de flottaison 1 lorsque celle-ci est complètement dépliée et complètement rétractée. On utilise par ailleurs comme paramètres cinq masses volumiques solides $\rho_s$ différentes et quatre masses volumiques liquides $\rho_l$ différentes.

| | | Canne de flottaison dépliée | | Canne de flottaison rétractée | |
|---|---|---|---|---|---|
| Masse volumique solide $\rho_s$ (kg/m³) | Masse volumique liquide $\rho_l$ (kg/m³) | Masse volumique canne dépliée $\rho_{sd}$ (kg/m³) | Différence ($\rho_{sd} - \rho_l$) (kg/m³) | Masse volumique canne rétractée $\rho_{sd}$ (kg/m³) | Différence ($\rho_{sd} - \rho_l$) (kg/m³) |
| 1030 | 983,2 | 984,1 | 0,9 | 1000,5 | 17,3 |
| 1030 | 977,9 | 978,9 | 1 | 997,1 | 19,2 |
| 1030 | 972 | 973,1 | 1,1 | 993,4 | 21,4 |
| 1030 | 965 | 966,2 | 1,2 | 989 | 24 |
| 983,2 | 983,2 | 983,2 | 0 | 983,2 | 0 |
| 983,2 | 977,9 | 978 | 0,1 | 979,9 | 2 |
| 983,2 | 972 | 972,2 | 0,2 | 976,1 | 4,1 |
| 983,2 | 965 | 965,3 | 0,3 | 971,7 | 6,7 |
| 977,9 | 983,1 | 983,1 | -0,1 | 981,2 | -2 |
| 977,9 | 977,9 | 977,9 | 0 | 977,9 | 0 |

(suite)

| Masse volumique solide $\rho_s$ (kg/m$^3$) | Masse volumique liquide $\rho_l$ (kg/m$^3$) | Canne de flottaison dépliée | | Canne de flottaison rétractée | |
|---|---|---|---|---|---|
| | | Masse volumique canne dépliée $\rho_{sd}$ (kg/m$^3$) | Différence $(\rho_{sd} - \rho_l)$ (kg/m$^3$) | Masse volumique canne rétractée $\rho_{sd}$ (kg/m$^3$) | Différence $(\rho_{sd} - \rho_l)$ (kg/m$^3$) |
| 977,9 | 972,1 | 972,1 | 0,1 | 974,2 | 2,2 |
| 977,9 | 965,2 | 965,2 | 0,2 | 969,8 | 4,8 |
| 972 | 983 | 983 | -0,2 | 979,1 | -4,1 |
| 972 | 977,8 | 977,8 | -0,1 | 975,7 | -2,2 |
| 972 | 972 | 972 | 0 | 972 | 0 |
| 972 | 965,1 | 965,1 | 0,1 | 967,6 | 2,6 |
| 965 | 982,9 | 982,9 | -0,3 | 976,5 | -6,7 |
| 965 | 977,7 | 977,7 | -0,2 | 973,1 | -4,8 |
| 965 | 971,9 | 971,9 | -0,1 | 969,4 | -2,6 |
| 965 | 965 | 965 | 0 | 965 | 0 |

Ainsi, les écarts de masse volumique entre le liquide et la canne de flottaison 1 sont négligeables en position dépliée alors qu'ils sont plus importants en position rétractée. Ces écarts sont de plus négatifs pour les faibles masses volumiques solides et positifs pour les fortes masses volumiques solides. Cette particularité peut ainsi offrir une large possibilité d'optimisation de fonctionnement de la canne de flottaison 1.

Ainsi, le choix de la masse volumique de la partie solide de la canne de flottaison 1 est stratégique pour ajuster le fonctionnement de la canne de flottaison 1 quel que soit son état de déploiement. L'optimisation de cet ajustage peut notamment se faire par expérimentation.

Bien entendu, l'invention n'est pas limitée aux exemples de réalisation qui viennent d'être décrits. Diverses modifications peuvent y être apportées par l'homme du métier.

**Revendications**

1.   Système de distribution (1) de fluide caloporteur pour un dispositif de stockage d'énergie thermique (50) comportant un réservoir de stockage thermique (51) stratifié de fluide caloporteur, pour l'injection et/ou le soutirage de fluide caloporteur au sein du réservoir de stockage thermique (51),

ledit système de distribution (1) se présentant sous une forme télescopique, comportant une pluralité d'éléments de distribution (2a-2e) emboîtés les uns dans les autres et coulissant les uns par rapport aux autres, pour permettre le déploiement et/ou la rétractation du système de distribution (1) selon une configuration prédéterminée pour la distribution de fluide caloporteur au sein d'une strate thermique cible du réservoir de stockage thermique (51) de température sensiblement égale à la température du fluide caloporteur destiné à être distribué, au moins l'un (2e) des éléments de distribution (2a-2e) comportant un élément diffuseur (3) de fluide caloporteur,

la masse volumique solide ($\rho_s$) de la partie solide du système de distribution (1), comprenant la pluralité d'éléments de distribution (2a-2e), étant sensiblement égale à la masse volumique fluidique ($\rho_l$) de la partie fluidique du système de distribution (1), comprenant le fluide caloporteur destiné à être distribué au sein de ladite strate thermique cible, par injection et/ou soutirage, pour permettre la flottaison dudit élément diffuseur (3) au niveau de ladite strate thermique cible,

tout ou partie des éléments de distribution (2a-2e) comportant au moins un élément de flottaison (7), configuré pour conférer à la pluralité d'éléments de distribution (2a-2e) du système de distribution (1) une masse volumique ($\rho_s$) sensiblement égale à la masse volumique ($\rho_l$) du fluide caloporteur destiné à être distribué,

et ledit au moins un élément de flottaison (7) étant intégré à l'intérieur d'une paroi latérale (8) d'au moins un élément de distribution (2a-2e).

2.   Système selon la revendication 1, **caractérisé en ce que** la pluralité d'éléments de distribution (2a-2e) est réalisée dans un ou plusieurs matériaux de masse volumique ($\rho_s$) sensiblement égale à la masse volumique ($\rho_l$) du fluide

caloporteur destiné à être distribué.

3. Système selon la revendication 1 ou 2, **caractérisé en ce que** ledit au moins un élément de flottaison (7) est un flotteur d'air (7).

4. Système selon l'une quelconque des revendications précédentes, **caractérisé en ce que** tout ou partie des éléments de distribution (2a-2e) comporte au moins un matériau de masse volumique variable (9) intégré dans une enveloppe souple permettant sa dilatation et/ou sa rétractation en fonction de la température du fluide caloporteur destiné à être distribué de sorte à modifier la masse volumique totale des éléments de distribution (2a-2e).

5. Système selon l'une quelconque des revendications précédentes, **caractérisé en ce qu'**il comporte un élément proximal de distribution (2a) pourvu d'un moyen de solidarisation (4) au dispositif de stockage d'énergie thermique (50), un élément distal de distribution (2e) pourvu d'un élément diffuseur (3) de fluide caloporteur, et un ou plusieurs éléments intermédiaires de distribution (2b, 2c, 2d), les éléments de distribution (2a-2e) étant successivement emboîtés les uns dans les autres depuis l'élément proximal de distribution (2a) jusqu'à l'élément distal de distribution (2e), la section de passage (Sa-Se) de fluide caloporteur des éléments de distribution (2a-2e) augmentant notamment progressivement depuis l'élément proximal de distribution (2a) jusqu'à l'élément distal de distribution (2e) du système de distribution (1), l'élément diffuseur (3) de l'élément distal de distribution (2e) comportant notamment des moyens de diffusion radiaux (3a) de fluide caloporteur.

6. Système selon l'une quelconque des revendications précédentes, **caractérisé en ce que** les éléments de distribution (2a-2e) se présentent sous la forme de tubes cylindriques avec des diamètres différents.

7. Système selon l'une quelconque des revendications précédentes, **caractérisé en ce que** l'emboîtement d'un premier élément de distribution (2b) dans un deuxième élément de distribution (2c) est réalisé par la coopération entre une portion distale de forme cylindro-tronconique (5b) du premier élément de distribution (2b) et une portion proximale de forme tronconique (6c) du deuxième élément de distribution (2c), la portion proximale de forme tronconique (6c) du deuxième élément de distribution (2c) recouvrant la portion distale de forme cylindro-tronconique (5b) du premier élément de distribution (2b) de sorte à venir en butée l'une contre l'autre lors de l'éloignement par coulissement des premier (2b) et deuxième (2c) éléments de distribution l'un par rapport à l'autre.

8. Système selon l'une quelconque des revendications précédentes, **caractérisé en ce que** les éléments de distribution (2a-2e) ne sont pas solidarisés les uns aux autres.

9. Système selon l'une quelconque des revendications précédentes, **caractérisé en ce que** les éléments de distribution (2a-2e) sont réalisés à partir d'un ou plusieurs matériaux polymères, notamment choisis parmi : du polycarbonate (PC), du polyamide (PA), du polyoxyméthylène (POM), du polyphényléther (PPE), du polytétrafluoroéthène (PTFE), du polyétheréthercétone (PEEK), du polyéthersulfone (PES), du polysulfone (PSU), du polyéthylènimine (PEI), du polysulfure de phénylène (PPS) et/ou du polyfluorure de vinylidène (PVDF).

10. Dispositif de stockage d'énergie thermique (50), notamment un dispositif de stockage d'énergie thermique par chaleur sensible, **caractérisé en ce qu'**il comporte :

     - un réservoir de stockage thermique (51) stratifié comportant un fluide caloporteur pour le stockage d'énergie thermique, et
     - un système de distribution (1) de fluide caloporteur selon l'une quelconque des revendications précédentes, s'étendant à l'intérieur du réservoir de stockage thermique (51) pour l'injection et/ou le soutirage de fluide caloporteur.

11. Dispositif selon la revendication 10, **caractérisé en ce que** le système de distribution (1) est solidarisé à l'une de ses extrémités à une paroi interne (51a) du réservoir de stockage thermique (51), notamment la paroi interne supérieure (51a), l'autre de ses extrémités comportant notamment ledit élément diffuseur (3) de fluide caloporteur.

12. Dispositif selon la revendication 10 ou 11, **caractérisé en ce qu'**il comporte en outre un élément de guidage (12), traversant l'intérieur des éléments de distribution (2a-2e) du système de distribution (1) sur toute sa longueur, étant notamment solidarisé à la paroi interne supérieure (51a) du réservoir de stockage thermique (51) et à la paroi interne inférieure (51b) du réservoir de stockage thermique (51).

**13.** Procédé de distribution de fluide caloporteur dans un dispositif de stockage d'énergie thermique (50) selon l'une quelconque des revendications 10 à 12, pour l'injection et/ou le soutirage de fluide caloporteur au sein du réservoir de stockage thermique (51), **caractérisé en ce qu'**il est mis en œuvre au moyen d'un système de distribution (1) selon l'une quelconque des revendications 1 à 10, et **en ce qu'**il comporte l'étape consistant à injecter un fluide caloporteur dans une strate thermique du réservoir de stockage thermique de même température que le fluide caloporteur par le biais du système de distribution (1), notamment par le biais de l'élément diffuseur (3) de fluide caloporteur, et/ou l'étape consistant à soutirer un fluide caloporteur de température prédéterminée depuis une strate thermique du réservoir de stockage thermique de même température que le fluide caloporteur par le biais du système de distribution (1), notamment par le biais de l'élément diffuseur (3) de fluide caloporteur.

**14.** Procédé selon la revendication 13, **caractérisé en ce qu'**il comporte l'étape consistant à déterminer la masse volumique solide ($\rho_s$) de la partie solide du système de distribution (1), comprenant la pluralité d'éléments de distribution (2a-2e), de façon à être sensiblement égale à la masse volumique fluidique ($\rho_l$) de la partie fluidique du système de distribution (1), comprenant le fluide caloporteur destiné à être distribué, par injection et/ou soutirage.


**Patentansprüche**

**1.** Wärmeträgerfluid-Verteilungssystem (1) für eine Wärmeenergiespeichervorrichtung (50), enthaltend einen geschichteten Wärmespeicherbehälter (51) für Wärmeträgerfluid zum Zuführen und/oder Abführen von Wärmeträgerfluid innerhalb des Wärmespeicherbehälters (51), wobei das Verteilungssystem (1) in teleskopischer Form vorliegt und eine Vielzahl von Verteilungselementen (2a - 2e) enthält, die ineinandergesteckt und zueinander gleitbeweglich sind, um das Einfahren und/oder Ausfahren des Verteilungssystems (1) gemäß einer vorbestimmten Konfiguration für die Verteilung des Wärmeträgerfluids in einer thermischen Zielschicht des Wärmespeicherbehälters (51) mit einer Temperatur, die im Wesentlichen gleich der Temperatur des zu verteilenden Wärmeträgerfluids ist, zu ermöglichen, wobei zumindest eines (2e) der Verteilungselemente (2a - 2e) ein Wärmeträgerfluid-Diffusorelement (3) enthält,
wobei die Feststoffdichte ($\rho_s$) des Feststoffteils des Verteilungssystems (1), das die Vielzahl von Verteilungselementen (2a - 2e) enthält, im Wesentlichen gleich der Fluiddichte ($\rho_l$) des Fluidteils des Verteilungssystems (1) ist, das das Wärmeträgerfluid enthält, das innerhalb der thermischen Zielschicht durch Zu- und/oder Abführen zu verteilen ist, um das Schwimmen des Diffusorelements (3) im Bereich der thermischen Zielschicht zu ermöglichen, wobei alle oder einige der Verteilungselemente (2a - 2e) zumindest ein Schwimmerelement (7) enthalten, das dazu ausgelegt ist, der Vielzahl der Verteilungselemente (2a - 2e) des Verteilungssystems (1) eine Dichte ($\rho_s$) zu verleihen, die im Wesentlichen gleich der Dichte ($\rho_l$) des zu verteilenden Wärmeträgerfluids ist,
und wobei das zumindest eine Schwimmerelement (7) innerhalb einer Seitenwand (8) zumindest eines Verteilungselements (2a - 2e) integriert ist.

**2.** System nach Anspruch 1,
**dadurch gekennzeichnet, dass**
die Vielzahl von Verteilungselementen (2a - 2e) aus einem oder mehreren Werkstoffen hergestellt ist, deren Dichte ($\rho_s$) im Wesentlichen gleich der Dichte ($\rho_l$) des zu verteilenden Wärmeträgerfluids ist.

**3.** System nach Anspruch 1 oder 2,
**dadurch gekennzeichnet, dass**
das zumindest eine Schwimmerelement (7) ein Luftschwimmer (7) ist.

**4.** System nach einem der vorangehenden Ansprüche,
**dadurch gekennzeichnet, dass**
alle oder einige der Verteilungselemente (2a - 2e) zumindest einen Werkstoff (9) mit variabler Dichte enthalten, das in einer nachgiebigen Hülle integriert ist, die seine Ausdehnung und/oder sein Zusammenziehen in Abhängigkeit von der Temperatur des zu verteilenden Wärmeträgerfluids ermöglicht, um die Gesamtdichte der Verteilungselemente (2a - 2e) zu verändern.

**5.** System nach einem der vorangehenden Ansprüche,
**dadurch gekennzeichnet, dass**
es ein proximales Verteilungselement (2a) enthält, das mit einer Befestigungseinrichtung (4) zum Befestigen an die WärmeenergieSpeichervorrichtung (50) versehen ist, sowie ein distales Verteilungselement (2e), das mit einem Wärmeträgerfluid-Diffusorelement (3) versehen ist, und ein oder mehrere Verteilungszwischenelemente (2b, 2c, 2d), wobei die Verteilungselemente (2a - 2e) vom proximalen Verteilungselement (2a) zum distalen Verteilungselement (2e) nacheinander ineinandergesteckt sind, wobei der Wärmeträgerfluid-Durchgangsquerschnitt (Sa - Se) der Verteilungselemente (2a - 2e) insbesondere progressiv von dem proximalen Verteilungselement (2a) zu dem distalen Verteilungselement (2e) des Verteilungssystems (1) zunimmt, wobei das Diffusorelement (3) des distalen Verteilungselements (2e) insbesondere radiale Wärmeträgerfluid-Diffusionsmittel (3a) aufweist.

6. System nach einem der vorangehenden Ansprüche,
**dadurch gekennzeichnet, dass**
die Verteilungselemente (2a - 2e) in Form von zylindrischen Rohren mit unterschiedlichen Durchmessern vorliegen.

7. System nach einem der vorangehenden Ansprüche,
**dadurch gekennzeichnet, dass**
das Einstecken eines ersten Verteilungselements (2b) in ein zweites Verteilungselement (2c) durch das Zusammenwirken zwischen einem distalen Abschnitt mit zylindrisch-kegelstumpfförmiger Form (5b) des ersten Verteilungselements (2b) und einem proximalen Abschnitt mit kegelstumpfförmiger Form (6c) des zweiten Verteilungselements (2c) erfolgt, wobei der proximale Abschnitt mit kegelstumpfförmiger Form (6c) des zweiten Verteilungselements (2c) den distalen Abschnitt mit zylindrisch-kegelstumpfförmiger Form (5b) des ersten Verteilungselements (2b) bedeckt, so dass sie in Anschlag aneinander gelangen, wenn das erste (2b) und das zweite Verteilungselement (2c) voneinander weggeschoben werden.

8. System nach einem der vorangehenden Ansprüche,
**dadurch gekennzeichnet, dass**
die Verteilungselemente (2a - 2e) nicht miteinander verbunden sind.

9. System nach einem der vorangehenden Ansprüche,
**dadurch gekennzeichnet, dass**
die Verteilungselemente (2a - 2e) aus einem oder mehreren polymeren Materialien hergestellt sind, die insbesondere ausgewählt sind aus: Polycarbonat (PC), Polyamid (PA), Polyoxymethylen (POM), Polyphenylether (PPE), Polytetrafluorethen (PTFE), Polyetheretherketon (PEEK), Polyethersulfon (PES), Polysulfon (PSU), Polyethylenimin (PEI), Polyphenylensulfid (PPS) und/oder Polyvinylidenfluorid (PVDF).

10. Vorrichtung (50) zur Speicherung von Wärmeenergie, insbesondere Vorrichtung zur Speicherung von Wärmeenergie durch fühlbare Wärme, **dadurch gekennzeichnet, dass** sie enthält:

- einen geschichteten Wärmespeicherbehälter (51), der ein Wärmeträgerfluid zur Speicherung von Wärmeenergie enthält, und
- ein Wärmeträgerfluid-Verteilungssystem (1) nach einem der vorangehenden Ansprüche, das sich im Inneren des Wärmespeicherbehälters (51) für das Zuführen und/oder Abführen von Wärmeträgerfluid erstreckt.

11. Vorrichtung nach Anspruch 10,
**dadurch gekennzeichnet, dass**
das Verteilersystem (1) an einem seiner Enden mit einer Innenwand (51a) des Wärmespeicherbehälters (51), insbesondere mit der oberen Innenwand (51a), fest verbunden ist, während das andere seiner Enden insbesondere das Diffusorelement (3) für das Wärmeträgerfluid enthält.

12. Vorrichtung nach Anspruch 10 oder 11,
**dadurch gekennzeichnet, dass**
es ferner ein Führungselement (12) enthält, das sich durch das Innere der Verteilungselemente (2a - 2e) des Verteilungssystems (1) über seine gesamte Länge erstreckt und insbesondere mit der oberen Innenwand (51a) des Wärmespeicherbehälters (51) und mit der unteren Innenwand (51b) des Wärmespeicherbehälters (51) fest verbunden ist.

13. Verfahren zum Verteilen von Wärmeträgerfluid in einer Wärmeenergiespeichervorrichtung (50) nach einem der Ansprüche 10 bis 12 zum Zuführen und/oder Abführen von Wärmeträgerfluid innerhalb des Wärmespeicherbehälters (51),
**dadurch gekennzeichnet, dass**
es mittels eines Verteilungssystem (1) nach einem der Ansprüche 1 bis 10 durchgeführt wird, und dass es den Schritt des Zuführens von Wärmeträgerfluid in eine thermische Schicht des Wärmespeicherbehälters (51) mit gleicher Temperatur wie das Wärmeträgerfluid über das Verteilungssystem (1), insbesondere über das Wärmeträgerfluid-Diffusorelement (3), umfasst, und/oder den Schritt des Abführens von Wärmeträgerfluid mit vorbestimmter Temperatur von einer thermischen Schicht des Wärmespeicherbehälters mit gleicher Temperatur wie das Wärmeträgerfluid über das Verteilungssystem (1), insbesondere über das Wärmeträgerfluid-Diffusorelement (3), umfasst.

14. Verfahren nach Anspruch 13,
**dadurch gekennzeichnet, dass**
es den Schritt des Bestimmens der Feststoffdichte ($\rho_s$) des Feststoffteils des Verteilungssystems (1) umfasst, das die Vielzahl von Verteilungselementen (2a - 2e) enthält, derart, dass sie im Wesentlichen gleich der Fluiddichte ($\rho_l$) des Fluidteils des Verteilungssystems (1) ist, das das Wärmeträgerfluid enthält, das durch Zu- und/oder Abführen zu verteilen ist.

**Claims**

1. A system (1) for distributing heat transfer fluid for a thermal energy storage device (50) including a thermal storage tank (51) stratified by heat transfer fluid, for injecting and/or withdrawing heat transfer fluid within the thermal storage tank (51),
said distribution system (1) being in a telescopic shape, including a plurality of distribution elements (2a-2e) fitted inside one another and sliding relative to each other, to allow deployment and/or retraction of the distribution system (1) according to a predetermined configuration for distributing heat transfer fluid within a target thermal stratum of the thermal storage tank (51) having a temperature substantially equal to the temperature of the heat transfer fluid intended to be distributed, at least one (2e) of the distribution elements (2a-2e) including a heat transfer fluid diffuser element (3),
the solid density ($\rho_s$) of the solid part of the distribution system (1), comprising the plurality of distribution elements (2a-2e), being substantially equal to the fluid density ($\rho_l$) of the fluid part of the distribution system (1), comprising the heat transfer fluid intended to be distributed within said target thermal stratum, by injection and/or withdrawal, to allow flotation of said diffuser element (3) at the level of said target thermal stratum,
all or part of the distribution elements (2a-2e) including at least one flotation element (7), configured to give the plurality of distribution elements (2a-2e) of the distribution system (1) a density ($\rho_s$) substantially equal to the density ($\rho_l$) of the heat transfer fluid intended to be distributed,
and said at least one flotation element (7) being integrated inside a side wall (8) of at least one distribution element (2a-2e).

2. The system according to claim 1, **characterized in that** the plurality of distribution elements (2a-2e) is made of one or more material (s) with a density ($\rho_s$) substantially equal to the density ($\rho_l$) of the heat transfer fluid intended to be distributed.

3. The system according to claim 1 or 2, **characterized in that** said at least one flotation element (7) is an air float (7).

4. The system according to any one of the preceding claims, **characterized in that** all or part of the distribution elements (2a-2e) includes at least one variable density material (9) integrated into a flexible envelope allowing its expansion and/or its shrinkage depending on the temperature of the heat transfer fluid intended to be distributed so as to modify the total density of the distribution elements (2a-2e).

5. The system according to any one of the preceding claims, **characterized in that** it includes a proximal distribution element (2a) provided with a means (4) for securing to the thermal energy storage device (50), a distal distribution element (2e) provided with a heat transfer fluid diffuser element (3), and one or more intermediate distribution element(s) (2b, 2c, 2d), the distribution elements (2a-2e) being successively fitted inside one another from the proximal distribution element (2a) to the distal distribution element (2e), the passage section (Sa-Se) of the heat transfer fluid of the distribution elements (2a-2e) increasing in particular gradually from the proximal distribution element (2a) to the distal distribution element (2e) of the distribution system (1), the diffuser element (3) of the distal distribution element (2e) including in particular radial diffusion means (3a) of the heat transfer fluid.

6. The system according to any one of the preceding claims, **characterized in that** the distribution elements (2a-2e) are in the shape of cylindrical tubes with different diameters.

7. The system according to any one of the preceding claims, **characterized in that** the fitting of a first distribution element (2b) into a second distribution element (2c) is achieved by the cooperation between a distal cylindro-conical portion (5b) of the first distribution element (2b) and a proximal frusto-conical portion (6c) of the second distribution element (2c), the proximal frusto-conical portion (6c) of the second distribution element (2c) covering the distal cylindro-conical portion (5b) of the first distribution element (2b) so as to abut against one another when the first (2b) and second (2c) distribution elements slide away from each other.

8. The system according to any one of the preceding claims, **characterized in that** the distribution elements (2a-2e) are not secured to each other.

9. The system according to any one of the preceding claims, **characterized in that** the distribution elements (2a-2e) are made from one or more polymer material(s), in particular selected from: polycarbonate (PC), polyamide (PA), polyoxymethylene (POM), polyphenylether (PPE), polytetrafluoroethene (PTFE), polyetheretherketone (PEEK), polyethersulfone (PES), polysulfone (PSU), polyethyleneimine (PEI), phenylene polysulfide (PPS) and/or polyvinylidene fluoride (PVDF).

10. A thermal energy storage device (50), in particular a thermal energy storage device by sensible heat, **characterized in that** it includes:

    - a stratified thermal storage tank (51) including a heat transfer fluid for storing thermal energy, and
    - a heat transfer fluid distribution system (1) according to any one of the preceding claims, extending inside the thermal storage tank (51) for injecting and/or withdrawing heat transfer fluid.

11. The device according to claim 10, **characterized in that** the distribution system (1) is secured at one of its ends to an inner wall (51a) of the thermal storage tank (51), in particular the upper inner wall (51a), the other of its ends including in particular said heat transfer fluid diffuser element (3).

12. The device according to claim 10 or 11, **characterized in that** it further includes a guide element (12) passing through the interior of the distribution elements (2a-2e) of the distribution system (1) over its entire length, being in particular secured to the upper inner wall (51a) of the thermal storage tank (51) and to the lower inner wall (51b) of the thermal storage tank (51).

13. A method for distributing a heat transfer fluid in a thermal energy storage device (50) according to any one of claims 10 to 12, for the injection and/or the withdrawal of the heat transfer fluid within the thermal storage tank (51), **characterized in that** it is implemented by means of a distribution system (1) according to any one of claims 1 to 10, and **in that** it includes the step of injecting a heat transfer fluid into a thermal stratum of the thermal storage tank having the same temperature as the heat transfer fluid via the distribution system (1), in particular via the heat transfer fluid diffuser element (3), and/or the step of withdrawing a heat transfer fluid having a predetermined temperature from a thermal stratum of the thermal storage tank having the same temperature as the heat transfer fluid via the distribution system (1), in particular via the heat transfer fluid diffuser element (3).

14. The method according to claim 13, **characterized in that** it includes the step of determining the solid density ($\rho_s$) of the solid part of the distribution system (1), comprising the plurality of distribution elements (2a-2e), so as to be substantially equal to the fluid density ($\rho_l$) of the fluid part of the distribution system (1), comprising the heat transfer fluid intended to be distributed, by injection and/or withdrawal.

FIG. 1

FIG. 2

FIG. 3A

FIG. 3B

FIG. 3C

FIG. 4A

FIG. 4B

FIG. 5

FIG. 6

FIG. 7

FIG. 8

**FIG. 9**

**FIG. 10**

**FIG. 11**

**EP 3 271 633 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2065666 A1
- KR 20050064018 A
- WO 2013083911 A1
- EP 1039256 A